# EUROPEAN PATENT SPECIFICATION

(11) **EP 1 519 974 B1**
(45) Date of publication and mention of the grant of the patent: **09.08.2017**
(21) Application number: 03732138.7
(22) Date of filing: 17.06.2003
(51) Int. Cl.: C08G 18/22, C08G 18/24, C08G 18/79, C08G 18/66

(54) **MICRO-CELLULAR OR NON-CELLULAR LIGHT-STABLE POLYURETHANE MATERIAL AND METHOD FOR THE PRODUCTION THEREOF**
MIKROZELLULÄRES ODER NICHTZELLULÄRES LICHTSTABILES POLYURETHANMATERIAL UND VERFAHREN ZU SEINER HERSTELLUNG
MATERIAU POLYURETHANE PHOTOSTABLE MICROCELLULAIRE OU NON CELLULAIRE ET PROCEDE PERMETTANT DE LE PRODUIRE

(30) Priority: 21.06.2002 WO PCT/BE02/00104
(43) Date of publication of application: 06.04.2005
(73) Proprietor: BASF SE, 67056 Ludwigshafen am Rhein (DE)
(72) Inventor: TROSSAERT, Geert, B-9630 Zwalm (BE); DU PREZ, Eddie, B-9660 Brakel (BE)
(74) Representative: Van Reet, Joseph
(86) International application number: PCT/BE2003/000107
(87) International publication number: WO 2004/000905

(56) References cited:
- EP-A- 0 379 246
- US-A- 5 159 012
- US-B1- 6 242 555
- DATABASE WPI Section Ch, Week 199948 Derwent Publications Ltd., London, GB; Class A25, AN 1999-064122 XP002253542 & JP 10 309733 A (TOYODA GOSEI KK), 24 November 1998 (1998-11-24)

## Description

The present invention relates to a method for producing a micro-cellular or non-cellular light-stable polyurethane material having a density higher than 500 kg/m³, in particular higher than 700 kg/m³, in which method a reactive mixture of polyurethane precursors is allowed to react to produce the polyurethane material, the reactive mixture being composed of components as defined in the preamble of claim 1 and comprising in particular a catalyst component which is substantially free of lead and which contains an organobismuth (III) catalyst.

Such a method can be used to produce a thermoplastic polyurethane material (TPU), namely by selecting a functionality of two for the different mutually reactive components. The TPU material can be produced for example by a so-called reactive extrusion process in the form of a granulate which is intended to be processed further via an extrusion or a slush moulding process. The non-thermoplastic polyurethane materials are usually produced by a spray process or by a reaction injection moulding (RIM) process.

A spray process for producing a light-stable elastomeric polyurethane material, which is micro-cellular or non-cellular, is for example disclosed in EP-B-0 379 246. In this European patent different types of catalysts are disclosed including organolead, organobismuth, organotin and alkaline catalysts which are used in combination with an amine initiator to provide the required catalytic effect. To improve the required light-stability of the polyurethane material, mixtures of antioxidants and UV absorbers are described. Various examples of different polyurethane formulations are disclosed, in each of which the same antioxidant/UV absorber combination is used.

A RIM process for producing a light-stable micro-cellular or non-cellular elastomeric polyurethane material is disclosed in EP-B-0 929 586. Also in the methods described in this patent different types of catalysts are disclosed including organolead, organobismuth, organotin and alkaline catalysts. These catalysts are used in combination with an amine initiator to provide the required catalytic effect.

The polyurethane materials produced in accordance with the above described European patents are mainly used in the automotive industry, for example for window encapsulations but especially also for interior trim parts such as dashboards, consoles, glove compartments, door covers.. For these applications always more stringent requirements have been imposed on the polyurethane materials. First of all the use of organolead compounds is forbidden or will be forbidden in the near future. Moreover, whereas in the beginning only the fogging characteristics of the materials were considered (measured according to DIN 75 201, Determination of the windscreen fogging characteristics of trim materials in motor vehicles), the content of volatile organic compounds (VOC) is now also to be analysed. Daimler Chrysler has for example developed its test method PB VWT 709 to measure the VOC content of a polyurethane sample whilst Volkswagen has developed its own test method PV 3341, the first edition of which dates already from December 87. In the present specification, the VOC values are always measured in accordance with the Daimler Chrysler test method PB VWT 709.

An important drawback of the methods disclosed in the above described European patents, especially those methods wherein no lead catalyst is used, is that they lead to a polyurethane material having a too high VOC value. The present inventors have found that this is first of all due to the use of the organobismuth, the organotin and the alkaline catalysts (in particular DBU compounds: 1,8-diazobicyclo(5,4,0)undecene-7-phenolate).

A further compound which has a negative effect on the VOC value is BHT (bis-2,6-tert.butyl-4-hydroxytoluene), which was present as stabiliser (antioxidant) in the active hydrogen containing components used in the examples of EP-B-0 379 246 and EP-B-0 929 586. As from the late nineties, polyol manufacturers have started to produce polyetherpolyols which are free of BHT, i.e. which comprise less than 50 ppm BHT. When using such a BHT-free polyol in the Examples of EP-B-0 929 586 wherein no organolead compound is used as catalyst, the VOC values of these examples are still too high, in particularly considerably higher than 250 ppm. These high VOC values are due to the presence of the organotin catalyst and of the organobismuth and/or the alkaline catalyst which are used in these examples and which the present inventors have found to increase the VOC value to a much greater extent than the organolead catalyst.

An object of the present invention is therefore to provide a new method for producing a micro-cellular or non-cellular light-stable polyurethane material which enables to achieve a polyurethane material with a VOC value lower than 250 ppm, or even lower than 150 or 100 ppm, without the use of an organolead catalyst.

To achieve this object the method according to the present invention is characterised in that the organobismuth catalyst comprises at least one organobismuth (m) catalyst corresponding to the following formula (I): 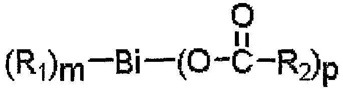
wherein m = 0 - 2
p=1-3
m + p = 3
R₁ is a C₁ - C₈ alkyl group; and
R₂ is either:
   a linear or branched C₁₃ - C₁₉ alkyl or alkenyl group, or
   a linear or branched C₁ - C₁₉ alkyl or alkenyl group, preferably a C₇ - C₁₉ alkyl or alkenyl group, substituted with at least one isocyanate-reactive group, in particular with one or more OH-, NH- and/or NH₂-groups,
the components of the reactive mixture being further selected in such a manner that the produced polyurethane material has a VOC value, measured in accordance with the Daimler Chrysler PB VWT 709 standard, lower than 250 ppm, preferably lower than 150 ppm and most preferably lower than or equal to 100 ppm.

In a preferred embodiment, said catalyst component comprises in addition to said organobismuth catalyst at least one organotin (II or IV) catalyst corresponding to the following formula (II): 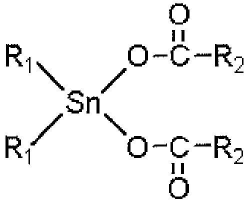 to the following formula (III): 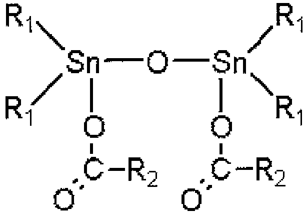 or to the following formula (IV) 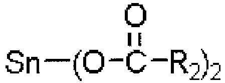 wherein:
R₁ is a C₁ - C₈ alkyl group; and
R₂ is either:
   a linear or branched C₁₃ - C₁₉ alkyl or alkenyl group, or
   a linear or branched C₁ - C₁₉ alkyl or alkenyl group, preferably a C₇ - C₁₉ alkyl or alkenyl group, substituted with at least one isocyanate-reactive group, in particular with one or more OH-, NH- and/or NH₂-groups.

According to the invention it was found that by using such organobismuth and organotin catalysts a substantial reduction of the VOC value can be achieved without the use of an organolead catalyst. The expression "substantially free of lead" is indeed used in the present specification to mean that no lead is present or only some traces which are in particular not detectable by the conventional techniques, the polyurethane material comprising less than 5 ppm, preferably less than 1 ppm of the element lead.

For the production of polyurethane foams, having a density lower than 500 kg/m³, it is already known from US-B-6 194 475 to use zinc (II) or tin (II) ricinoleate in combination with stannous octoate as catalyst to lower the 2-ethylhexanoic acid emission. In one example, namely in Example 19, tin (II) ricinoleate was used as the sole catalyst. From this example it appeared that even when using an amount of tin ricinoleate which is five times as high as the amount of tin octoate, the full rise time of the foam was still 15% greater. The need for a larger amount of tin (II) ricinoleate as catalyst in the production of flexible polyurethane foam compared to tin (III) octoate is confirmed in US-A1-2002/0016376.

In the method according to the present invention a micro-cellular or non-cellular polyurethane material is, however, produced which has a higher density and which has to be cured within a much shorter time. The polyurethane material is further based on an isocyanate compound wherein the isocyanate groups are not directly attached to an aromatic group and which is thus much less reactive than the aromatic isocyanates used in US-B-6 194 475 and US-A1-2002/0016376. In other words the catalytic system used in the method according to the present invention must be more effective in order to avoid the need for a too large amount of catalysts. Such a large amount of catalysts is not only to be avoided from an economical point of view. The maximum amount of catalysts in the polyol or in the isocyanate blend is for example also limited by the compatibility of the different compounds within the blend. When the compounds are not compatible with one another in their respective amounts undesired phase separations may for example occur within the blends.

In contrast to the methods disclosed in US-B-6 194 475 and US-A1-2002/0016376 use is made in the method according to the present invention of an organobismuth catalyst which was found to be considerably more effective for catalysing the "non-aromatic" polyurethane formulations than organotin or organozinc catalysts.

With respect to the organobismuth catalyst the present inventors have found rather surprisingly that, in contrast to the use of an organotin (II) catalyst in the production of an aromatic polyurethane foam, a same catalytic effect can be obtained when replacing bismuth octoate (=bismuth-2-ethylhexoate), which is the conventional organobismuth catalyst in the production of micro-cellular or non-cellular light-stable polyurethane materials, with a similar amount of bismuth oleate, i.e. an amount of bismuth oleate which contains a similar amount of the element bismuth as the bismuth octoate.

Both for the organobismuth and the organotin catalysts the present inventors further found that also high molecular weight carboxylates, different from ricinoleate, and lower molecular weight carboxylates containing isocyanate-reactive groups, are effective to reduce the emission of the polyurethane material, this in contrast to the teachings of US-B-6 194 475 according to which zinc stearate, oleate or 12-hydroxystearate would have no positive effect on the emission values.

With respect to the use of the organotin catalyst the combination of an organobismuth and an organotin catalyst was found to be advantageous in view of the fact that the organobismuth catalyst causes a quick initial viscosity build up whilst the organotin catalyst is more active at the end of the polymerisation reaction. Since a too quick initial viscosity build up has a negative effect on the tack-free time, this tack-free time can be reduced by replacing a portion of the bismuth catalyst by the tin catalyst. Such a reduced tack-free time is important to achieve economically acceptable demoulding times.

In a preferred embodiment of the method according to the invention, the catalyst component further comprises an organozinc (II) catalyst which corresponds in particular to the following formula (V): 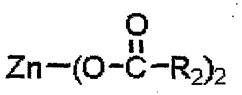 wherein R₂ is a C₁ to C₁₉, preferably a C₁ to C₁₂, alkyl or alkenyl group, which may be linear or branched and which may be substituted or not. Preferably, the organozinc catalyst comprises zinc dioctoate.

The present inventors have found that, just like the organolead carboxylates, zinc carboxylates do not cause any emissions or only a small amount. For the production of a micro-cellular or non-cellular light-stable polyurethane material the combination of an organobismuth and an organozinc catalyst was found to be advantageous in view of the fact that the organozinc catalyst competes with or inhibits the organobismuth catalyst so that the organobismuth catalyst can be prevented from causing a too quick initial viscosity build up so that the activity of the organobismuth catalyst is prolonged and the tack-free time is reduced.

Preferably, the catalyst component comprises an organobismuth, an organozinc and an organotin catalyst, especially when the reactive mixture is applied by a spray process. In this way, the action of the bismuth catalyst is prolonged by the competition with the zinc catalyst and the organotin catalyst provides for an effective curing at the end of the polymerisation reaction. This latter effect is especially important in spray applications in view of the lower temperature of the curing polyurethane material at the end of the polymerisation reaction, and thus the lower reactivity thereof, compared to a RIM process which is carried out in a closed, heated mould.

Other particularities and advantages of the invention will become apparent from the following description of a series of components and formulations which can be used in the methods according to the present invention and of the thus obtained polyurethane materials.

In general the invention relates to a method for producing a micro-cellular or non-cellular light-stable polyurethane material, in particular an elastomeric polyurethane material, having a density higher than 500 kg/m³, in particular higher than 700 kg/m³. In practice, the density of the polyurethane material is normally lower than 1200 kg/m³. The polyurethane materials are micro-cellular, showing optionally an integral skin, or non-cellular. They are produced starting from a reactive mixture of polyurethane precursors which are allowed to react, in particular by a so-called "one-shot" process wherein the components of the reactive polyurethane mixture are mixed before being applied into a mould or onto a mould surface. This can be done by a spray method as disclosed for example in EP-B-0 379 246 or by the reaction injection moulding (RIM) process as disclosed for example in EP-B-0 929 586. In these two different process types two blends are usually first composed, namely a so-called polyol blend and an isocyanate blend, which are mixed prior to being sprayed on a mould surface or to being injected in a mould. In addition to the possible spray or RIM applications, it is also possible to produce a thermoplastic polyurethane material, for example by means of a reactive extrusion technique.

In the method according to the invention, the reactive polyurethane mixture is composed of at least the following components:
A)an isocyanate component composed of at least one isocyanate compound having at least two NCO-groups which are not directly attached to an aromatic group;
B) isocyanate-reactive components comprising
   b1) an active hydrogen containing component composed of at least one active hydrogen containing compound having:
      functional groups comprising primary and/or secondary OH-groups, NH-groups and/or NH₂-groups;
      a nominal functionality of from 2 to 8; and
      an equivalent weight of between 100 and 4000, preferably of between 800 and 2000;
   b2) from 0 to 30 parts, preferably from 2 to 30 parts, per 100 parts of components b1, b2 and b3, of a chain-extender and/or cross-linker component composed of at least one chain-extender and/or of at least one cross-linker having an equivalent weight smaller than 100, the functional groups of which are OH-groups, at least 50% of which are primary OH-groups and the functionality of which is from 2 to 6; and
   b3) an amine-initiator component which forms a co-catalytic system with catalyst component C and which is composed of at least one amine-initiator which has a functionality of 2 to 6 and an equivalent weight lower or equal to 200 and which comprises at least one aliphatic or alicyclic NH₂- or NH-group; and
C)a catalyst component which is substantially free of lead and which comprises at least one organobismuth (III) catalyst.

The isocyanate component may comprise one isocyanate compound or a mixture of isocyanate compounds. The suitable isocyanate compounds can be very different. An essential feature of the isocyanate compounds is that they comprise at least two NCO-groups which are not directly attached to an aromatic group. In this way the obtained polyurethane material can be made light-stable. The isocyanate component comprises preferably IPDI (isophoronediisocyanate) monomers or trimers or a mixture thereof, the IPDI monomer/trimer mixture having preferably an NCO content of between 24.5 and 34 % by weight. Optionally, an isocyanate prepolymer, wherein a portion of the NCO-groups has already reacted with an active hydrogen containing compound, can also be used. Instead of IPDI other "non-aromatic" isocyanates can be used such as TMXDI, HDI, H6XDI and H12MDI or derivatives thereof. These isocyanates are described in EP-B-0 379 246 .

The isocyanate-reactive components comprise first of all an active hydrogen containing component. This component is composed of one or more active hydrogen containing compounds which have an equivalent weight of between 100 and 4000 and a nominal functionality of from 2 to 8. This active hydrogen containing compounds are preferably polyetherpolyols with terminal OH-groups prepared by polyaddition of propylene oxide and/or ethylene oxide on low molecular weight initiators with OH-, NH- and/or NH₂-groups and having a functionality of 2 to 8. This functionality corresponds to the nominal functionality of the polyetherpolyol. Preferably the nominal functionality of the active hydrogen containing compound is from 2 to 4. In view of the reactivity of the active hydrogen containing compound, preferably at least 50%, and more preferably at least 70% of the isocyanate reactive OH-groups are primary OH-groups.

Instead of, or in addition to, the OH-groups, the active hydrogen containing compounds may also contain isocyanate-reactive NH- or NH₂-groups. An example of such compounds are the so-called Jeffamines of Texaco.

Other types of active hydrogen containing compounds are the polyesterpolyols forming ester condensation products of dicarboxylic acids with low molecular weight polyalcohols having a functionality of 2 to 8, preferably of 2 to 4, corresponding to the nominal functionality of the polyesterpolyol.

Further suitable active hydrogen containing compounds are the polytetramethylene ether glycols (PTMG), which are polytetrahydrofuran with 100% primary OH-groups, and which have a nominal functionality of 2 and a hydroxyl number of 35 to 200.

The isocyanate-reactive components further comprise a cross-linker and/or chain-extender component composed of at least one cross-linker and/or of at least one chain-extender, the functional groups of which are OH groups. The chain-extender and/or the cross-linker has an equivalent weight smaller than 100. The presence of such a cross-linker and/or chain-extender is normally but not always required. It is used in an amount of 0 to about 30 parts, preferably from about 2 to about 30 parts, per 100 parts of components b1, b2 and b3.

Typical preferred cross-linkers or chain extenders with only active OH groups, which have a functionality of 2 to 4, a hydroxyl number higher than 250 and a primary OH group concentration higher than 50%, are ethylene glycol, propanediol, butanediol, pentanediol, hexanediol, glycerin, trimethylolpropane, triethanolamine, trimethylolethane, pentaerythrol, bisphenol A and cyclohexanedimethanol, and also possible addition products of all these examples with less than 5 or with 5 moles ethylene oxide and/or propylene oxide per mole chain extender/cross-lin ker.

The isocyanate-reactive components finally comprise an amine-initiator component which forms a co-catalytic system with catalyst component C. Such initiators are described i.a. in US-A-4 150 206 and US-A-4 292 411, provided that a minimum functionality of 2 is required.

Aliphatic or alicyclic alkanolamines or polyamines, having an amino group not directly attached to an aromatic ring are generally considered in this respect. The number of NH- and/or NH₂-groups is at least 2, if no OH-groups are present and, at least 1 if OH-groups are present. The total number of reactive groups, formed by -NH, -NH₂ or -OH, mostly varies between 2 and 5.

Typical preferred compounds, notably aliphatic compounds having a functionality of 2 to 4, are the following ones: monoethanolamine, diethanolamine, diisopropanolamine, ethylenediamine, isophoronediamine, N,N'-dimethyl(diethyl)-ethylenediamine, 2-amino-2-methyl (or ethyl)-1-propanol, 2-amino-1-butanol, 3-amino-1,2-propanediol, 2-amino-2-methyl (ethyl)-1,3-propanediol.

"Jeffamines" (Texaco) (propylene oxide addition products having mainly terminal primary NH₂ or secondary NH groups - functionality 2 to 3). Addition products of propylene oxide and/or ethylene oxide on ethylenediamine initiator (2 to 8 moles/mole ethylenediamine).

The above mentioned components of the light-stable polyurethane formulation are already described more into detail in EP-B-0 379 246 and also in EP-B-0 929 586.

A disadvantage of the known light-stable polyurethane formulations is that the produced polyurethane materials have a too high VOC value and that most of them are produced with a catalytic system comprising an organolead catalyst.

In order to reduce the VOC value use is first of all made of an active hydrogen containing component, in particular a polyetherpolyol, which is free of BHT or which comprises only a small amount of this stabiliser, in particular an amount smaller than 50 ppm. BHT is indeed known to contribute to the emission of the polyurethane materials and is thus to be avoided in order to reduce the VOC value.

An essential feature of the present invention to reduce the VOC emission values is the particular selection of the catalysts. In the method according to the invention use is made of an organobismuth (III) catalyst, optionally in combination with an organotin (IV), an organozinc (II) and/or another catalyst such as a zeolite type catalyst. The alkaline catalysts described in EP-B-0 379 246 are however not used anymore, or only in such a small amount that the VOC value of the produced polyurethane material remains below the maximum limit of 250, 150 or 100 ppm.

### Organobismuth (III) catalyst

The organobismuth catalyst used in the method according to the present invention comprises at least one an organobismuth (III) catalyst corresponding to the following general formula (I): 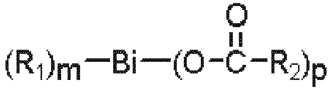
wherein m = 0 - 2
p = 1 - 3
m + p = 3
R₁ is a C₁ - C₈ alkyl group; and
R₂ is either:
   a linear or branched C₁₃ - C₁₉ alkyl or alkenyl group, or
   a linear or branched C₁ - C₁₉ alkyl or alkenyl group, preferably a C₇ - C₁₉ alkyl or alkenyl group, substituted with at least one isocyanate-reactive group, in particular with one or more OH-, NH- and/or NH₂-groups.

Compared to the organobismuth catalyst bismuth-(III)-2-ethylhexoate (="bismuth octoate"), the organobismuth catalysts of formula (I) cause considerably less volatile compounds in the polyurethane material. This is either due to the fact that the carboxylic acid produced when the catalyst is hydrolysed is less volatile due to the fact that it has a higher molecular weight or to the fact that this carboxylic acid is substituted with an isocyanate-reactive group so that it is chemically bound into the polyurethane network.

When the bismuth catalyst is a mono- or dialkylcarboxylate (m = 1 or 2), the alkyl group R₁ is preferably a C₁ - C₄ alkyl group in view of the higher reactivity and the lower melting point. The lower melting point is important in view of the fact that the catalyst is preferably added in liquid form to the polyurethane system. Most preferably, the bismuth catalyst is a bismuth carboxylate (m = 0) since such carboxylates are already commercially available and provide a good catalytic effect. Bismuth catalysts of this type are for example bismuth miristate, bismuth miristoleate, bismuth palmitate, bismuth stearate, bismuth oleate, bismuth linoleate, bismuth linolenate and bismuth ricinoleate.

Amongst these examples bismuth ricinoleate comprises a carboxyl group substituted with an isocyanate-reactive group, more particularly with an OH-group. In case of such substituted carboxyl groups, the R₂ group may be of a lower molecular weight. Preferably, the R₂ group is a C₇ - C₁₉ alkyl or alkenyl group.

Since the isocyanate-reactive group on the catalyst compound may cause a reduction of the catalytic activity by binding the catalyst to the polyurethane matrix, use is preferably made of an organobismuth catalyst of formula (I) wherein R₂ is a C₁₃ - C₁₉ alkyl or alkenyl group which is not substituted with an isocyanate-reactive group. The R₂ group is further preferably linear.

The R₂ alkyl or alkenyl group is preferably a C₁₅ - C₁₉ alkyl or alkenyl group in view of the lower vapour pressure of higher molecular weight carboxylic acids resulting in lower VOC values. The R₂ groups are further preferably alkenyl groups. The presence of one or more double bonds lowers indeed the melting point of the catalyst so that, even with a higher molecular weight, the catalyst can be added in liquid form to the polyurethane system. In view of the fact that they combine a relatively high molecular weight with a relatively low melting point, oleyl groups, linoleyl groups, linolenyl groups or combinations thereof are most preferred as the R₂COO-groups in formula (I) of the organobismuth catalyst. The most preferred organobismuth catalyst is bismuth (III) oleate, a small portion of the carboxylate groups being linoleate and linolenate groups due to the use of natural oils for producing this organobismuth catalyst.

As mentioned already hereabove, the reactive mixture can first of all be sprayed against a mould surface. In this case the organobismuth catalyst is normally used in such an amount that the produced polyurethane material contains 150 to 850 ppm, preferably 150 to 600 ppm, of the element bismuth. The reactive mixture can also be injected in a closed mould in accordance with the reaction injection moulding (RIM) process. In this case the organobismuth catalyst is normally used in such an amount that the produced polyurethane material contains 250 to 2500 ppm, preferably 800 to 1650 ppm, of the element bismuth.

In the method according to the invention, the organobismuth catalyst is preferably added to the polyol blend since when added to the isocyanate blend a system which is less stable as to reactivity is obtained. When added to the polyol blend, the organobismuth catalysts of formula (I), wherein R₂ is a C₁₃ - C₁₉, preferably a C₁₃ - C₁₉, alkyl or alkenyl group, offer the additional advantage of being less sensitive to hydrolysis in the polyol blend.

In addition to the organobismuth catalysts of formula (I) the organobismuth catalyst used in the method according to the present invention may comprise other organobismuth (III) catalysts, such as bismuth octoate. Since the use of these catalysts increases the VOC value of the produced polyurethane material, they should only be used in sufficiently small amounts, i.e. in such amounts that the VOC value remains below the prescribed maximum value. In some cases it has appeared that the use of an organobismuth catalyst of formula (I) is not essential and that the required catalytic effect can in particular be obtained by a combination of an organotin catalyst and a small amount of an organobismuth catalyst which releases volatile compounds without exceeding the allowed VOC value.

### Organotin catalyst

The organotin catalyst used in a preferred embodiment of the method according to the present invention corresponds to the following general formula (II): 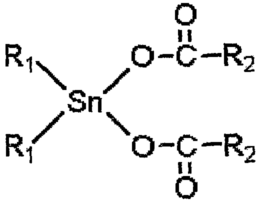 to the following general formula (III): 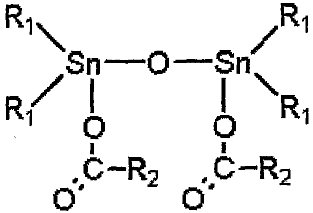 or to the following formula (IV) 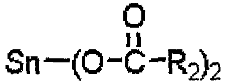
wherein R₁ is a C₁ - C₈ alkyl group; and
R₂ is either:
   a linear or branched C₁₃ - C₁₉ alkyl or alkenyl group, or
   a linear or branched C₁ - C₁₉ alkyl or alkenyl group, preferably a C₇ - C₁₉ alkyl or alkenyl group, substituted with at least one isocyanate-reactive group, in particular with one or more OH-, NH- and/or NH₂-groups.

Compared to the organotin catalyst dimethyltindineodecanoate, the above organotin catalysts cause considerably less volatile compounds in the polyurethane material. This is either due to the fact that the carboxylic acid produced when the catalyst is hydrolysed is less volatile due to the fact that it has a higher molecular weight or to the fact that this carboxylic acid is substituted with an isocyanate-reactive group so that it is chemically bound into the polyurethane matrix. In case of such substituted carboxyl groups, the R₂ group may be of a lower molecular weight. Preferably, the R₂ group is a C₇ - C₁₉ alkyl or alkenyl group.

Since the isocyanate-reactive group on the catalyst compound may cause a reduction of the catalytic activity by binding the catalyst to the polyurethane matrix, use is preferably made of an organotin catalyst of formula (II), (III) or (IV) wherein R₂ is a C₁₃ - C₁₉ alkyl or alkenyl group which is not substituted with an isocyanate-reactive group. The R₂ group is further preferably linear.

In the method according to the invention, use is preferably made of a tin catalyst of formula (II). It has indeed been found that the organotin catalysts of formula (III) are more sensitive to hydrolysis than the organotin catalysts of formula (II). Moreover, the organotin (IV) catalysts have been found to be more effective than the organotin (II) catalysts used for example in the methods disclosed in US-B-6 194 475 although such organotin catalysts, in particular tin ricinoleate, can also be used in the method according to the present invention especially when the main catalytic effect is provided by the organobismuth catalyst. Since also the organotin catalysts of fomula (II) are quite sensitive to hydrolysis, they are preferably added to the isocyanate blend. Even in this isocyanate blend the organotin catalysts of formula (II) are subjected to hydrolysis, more particularly as a result of contact with the moisture in the air. In view of this hydrolysis problem, the organotin catalysts wherein the R₂ group comprises no isocyanate reactive groups are especially preferred since the organotin catalyst would otherwise react already in the isocyanate blend or they would have to be added to the polyol blend wherein they are however subjected more to hydrolysis.

The R₂ alkyl or alkenyl group is preferably a C₁₅ - C₁₉ alkyl or alkenyl group in view of the lower vapour pressure of higher molecular weight carboxylic acids resulting in lower VOC values. The R₂ groups are further preferably alkenyl groups. The presence of one or more double bonds lowers indeed the melting point of the catalyst so that, even with a higher molecular weight, the catalyst can be added in liquid form to the polyurethane system. In view of the fact that they combine a relatively high molecular weight with a relatively low melting point, oleyl groups, linoleyl groups, linolenyl groups or combinations thereof are most preferred as the R₂COO-groups in formula's (II) and (III) of the organotin catalyst.

The alkyl group R₁ is preferably a C₁ - C₄ alkyl group, most preferably a methyl group, in view of the higher reactivity of such catalysts.

The most preferred organotin catalysts are dialkyltindioleates, in particular dimethyltindioleates, a small portion of the carboxylate groups being linoleate and linolenate groups due to the use of natural oils for producing this organotin catalyst.

When the reactive mixture is processed in accordance with a spray process, the organotin catalyst is normally used in such an amount that the produced polyurethane material contains 200 to 1600 ppm, preferably 200 to 1000 ppm, of the element tin. When the reactive mixture is processed in accordance with a reaction injection moulding (RIM) process, the organotin catalyst is normally used in such an amount that the produced polyurethane material contains 200 to 1600 ppm, preferably 300 to 1000 ppm, of the element tin.

The advantage of the preferred embodiment wherein a tin catalyst is used in combination of the bismuth catalyst is that the tin catalyst can provide for an effective curing at the end of the polymerisation reaction thus reducing the tack-free time. This advantage is more pronounced in spray applications than in RIM applications in view of the lower temperature of the reacting polyurethane material at the end of the polymerisation reaction when the reactive mixture is sprayed on an open mould surface.

### Organozinc (II) catalyst

In a preferred embodiment of the method according to the present invention use is further made of an organozinc (II) catalyst. This organozinc catalyst corresponds in particular to the following general formula (V): 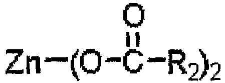 wherein R₂ is a C₁ to C₁₉ alkyl or alkenyl group, which may be linear or branched and which may be substituted or not.

Preferably, R₂ is a C₁ to C₁₂ alkyl or alkenyl group since those zinc catalysts are liquid which is preferable in view of the processability thereof. In contrast to the organobismuth and the organotin catalysts, the organozinc catalyst comprises less free carboxylic acid and/or is more resistant to hydrolysis so that less free carboxylic acid is formed. The zinc catalyst may thus contain carboxyl groups of a lower molecular weight, i.e. of a more volatile carboxylic acid. Preference is given to the use of zinc dioctoate.

According to the invention it was found that, in contrast to aromatic elastomeric polyurethane systems and polyurethane foam systems, organozinc catalysts as such do not provide an effective catalysis of the polyurethane polymerisation reaction of "non-aromatic" micro-cellular or non-cellular light-stable polyurethane formulations. In accordance with the present invention, use is however made in the first place of an organobismuth catalyst to provide the required catalytic effect. In combination with the organobismuth catalyst, the organozinc catalyst has been found to improve the catalytic effect of bismuth so that in fact a synergetic effect is achieved when using this combination of catalysts, especially when the organozinc catalyst is used in a relatively small amount relative to the amount of bismuth catalyst.

In the method according to the invention, the organozinc catalyst is indeed not intended to provide a catalytic effect but it has been found that the organozinc catalyst competes in the initial reaction phase with the organobismuth catalyst and that the undesired quick viscosity build up caused by the organobismuth catalyst can thus be avoided or at least reduced. This effect can be achieved when the catalyst component comprises the organobismuth and the organozinc catalyst in a bismuth element / zinc element ratio larger than 8/1, preferably larger than 9/1, when applying the reactive mixture by a spray process. When the reactive mixture is applied by a RIM process, wherein the reaction is usually carried out at a higher temperature, more zinc catalyst is needed to prevent a too quick viscosity build up. A further difference with a RIM process is that in a spray process a quicker initial viscosity build up is desired in view of avoiding a run-off of the reactive mixture. In case of a spray process, the catalyst component therefore comprises the organobismuth and the organozinc catalyst in a bismuth element / zinc element ratio larger than 4/1, preferably larger than 5/1. In both applications, the use of higher amounts of the organozinc catalyst is not preferred in view of the negative effect such higher amounts may have on the curing rate.

In a preferred embodiment of the present invention, the catalyst component comprises preferably a combination of an organobismuth, an organotin and an organozinc catalyst. By such a catalyst combination, an optimum catalysis can be obtained without the use of a lead catalyst, the organozinc catalyst providing for a slower initial viscosity build up whilst the organotin catalyst provides for a good final curing, especially in spray applications.

### Other catalysts

In the method according to the present invention use can further be made of other catalysts provided they do not give rise to volatile compounds, or to only a small amount of volatile amounts in the polyurethane material. These other catalysts can for example be selected amongst the other organobismuth or organotin compounds referred to in EP-B-0 379 246. They especially also include the zeolite type of catalysts which are described in this European patent and which do not produce volatile compounds. These catalysts are alkaline aluminium silicates with Na and/or K ions, wherein the diameter of the micro-cavities is preferably comprised between 2 and 10 A and typically between 3 and 4 A and which correspond to the following general formula:

(M₂O)ₐ - (Al₂O₃)_{b} - (SiO₂)_{c} - (H₂O)_{d}

wherein M represents potassium and/or sodium. In addition to sodium and/or potassium, also calcium ions can possibly be present.

These silicates can be mixed, as fine powders or as pastes, in liquid dispersion media with the other reaction products for producing the polyurethane material.

As mentioned already hereabove, the alkaline catalysts described in EP-B-0 379 246 should preferably not be used, or only in a small amount, in the method according to the present invention since they cause an increase of the volatile compounds in the polyurethane material.

In order to reduce the VOC value of the produced polyurethane material, the isocyanate component and the isocyanate reactive components are preferably mixed in such amounts with one another that the NCO-index (= number of NCO-groups X 100/number of isocyanate reactive groups) is higher than 90, more preferably higher than 95 and most preferably higher than or equal to 100. In the case of such high NCO-indexes, substantially no unreacted isocyanate reactive groups, in particular OH-groups, remain in the polyurethane material. When the NCO-index is higher than 100, there is an excess of NCO-groups which will however react with water present in the polyol component or with moisture from the air to produce amines which react further with the free NCO-groups to produce urea. Notwithstanding these further reactions, the NCO-index is preferably lower than 120 and most preferably lower than 110. By these selections of the NCO-index, a perfect polyurethane network can be obtained which has been found to reduce the release of volatile compounds out of the polyurethane material.

In addition to the above described components, the reactive mixture may comprise further components such as a small amount of physical or chemical blowing agents, colour pigments, internal release agents, thixotropic thickening agents (for spray applications). The reactive mixture may especially further contain antioxidants and/or UV-absorbers in view of improving the light-stability of the polyurethane material, use being preferably made of a synergetic combination of antioxidants, UV absorbers and HALS stabilisers (hindered amine light stabilisers).

### Examples

Following raw materials have been used in the examples :
Polyol: addition product of glycerin, propylene oxide and ethylene oxide, having a hydroxyl number of 36 and a primary OH content of at least 85% (POL);
Isocyanate: mixture of isocyanate trimers and isocyanate monomers based on IPDI, having a terminal NCO content of 28% (in case of S1-S5, R4-R6) and a terminal NCO content of 30% (in case of R1-R3) (ISO);
Chain extender: ethylene glycol (EG);
Cross-linker: diethanolamine (DEOA);
Antioxidants / UV absorbers: a synergetic mixture (AO/UV) of equal amounts by weight of:
   - ethylenebis(oxyethylene)bis[3-(5-tert.butyl-4-hydroxy-m-tolyl)propionate];
   - 2-(2-hydroxy-3,5-di-tert.amyl-phenyl)-2H-benzotriazole; and
   - bis(1,2,2,6,6-pentamethyl-4-piperidyl)sebacate
Zeolite type catalyst: sodium aluminium silicate - 3A, dispersed in the polyol (ZC);

| | | |
|---|---|---|
| Thixotropic agents: | | fumed silicon dioxide (TX); |
| Colour pigments: | | dispersion of carbon black, titanium dioxide and isoindolinon in the polyol for samples S1 till S5 and samples R1 till R3 ; |
| | | dispersion of carbon black for the samples R4 - R7 (CP); |
| Bi-catalyst: | BC1 : | Bismuth octoate containing 24% Bi; |
| | BC2 : | Bismuth neodecanoate containing 17% Bi; |
| | BC3 : | Bismuth oleate containing 20% Bi; |
| Sn-catalyst: | TC1 : | Dimethyltindineodecanoate containing 23% Sn; |
| | TC2 : | Dimethyltindioleate containing 17% Sn; |
| | TC3 : | Cotin 1707, a product of Caschem, namely a liquid organotin carboxylate catalyst containing a hydroxyl functionality in the carboxylic chain and 12.5% Sn; |
| Zn-catalyst: | Zinc octoate (ZNC) containing 23% of Zn | |

The above components were mixed into two blends, namely a polyol blend containing the polyol, chain extender, cross-linker, AO/UV absorber mixture, colour pigments, zeolite type catalyst and BC1, BC2, BC3, TC3 and/or ZNC and an isocyanate blend containing the isocyanate and the thixotropic agent and, when used, TC1 and/or TC2.

### 1. Sprayed samples (S1 - S5)

The technology processing conditions in these samples were the following:

| | |
|---|---|
| raw material temperature: | 25°C in tank |
| | 65°C at mixer/nozzle |
| nickel galvano mould surface temperature: | 65°C |
| output of the components: | 14 g/s |
| sprayed film thickness: | about 1 mm |
| external release agent: | emulsion of paraffin waxes in water. |

### 2. RIM Samples

A. The RIM samples R1 till R3 were processed under following conditions:
   raw material temperature: 45°C
   nickel galvano mould surface temperature: 80°C
   output of the components: 100 g/s
   layer thickness: about 2 mm
   external release agent: dispersion of paraffin waxes in mineral spirits.
B. The RIM-samples R4-R7 were processed under following conditions:
   raw material temperature: 45°C
   steel mould temperature: 105°C
   output of the components: 200 g/s
   layer thickness: about 3 mm
   external release agent: dispersion of paraffin waxes in mineral spirits

### Handling of the samples for emission measurements

Emission measurements are performed on samples which are cured for 72 hrs at 23°C/50% RH. The produced samples were wrapped in aluminium foil (2 layers), and then packed in a synthetic foil or bag poor in emission (like polyethylene, freezer bag). The foil or bag was closed with a Tesafilm.

Packed samples were frozen in at -18°C, until the day of analysis. The packed samples were then heated up till room temperature, unwrapped and analysed in accordance with the Daimler Chrysler test method PB VWT 709.

**Table 1: Formulations of the examples and emission values of the produced polyurethane materials.**

| | S1* | S2 | S3 | S4 | S5 | R1* | R2* | R3 | R4 | R5 | R6 | R7 |
|---|---|---|---|---|---|---|---|---|---|---|---|---|
| POL | 90 | 90 | 90 | 90 | 90 | 90 | 90 | 90 | 90 | 90 | 90 | 90 |
| ISO | 50.7 | 50.7 | 51.2 | 55.1 | 51.2 | 42.8 | 42.8 | 42.8 | 56.8 | 48.1 | 48.1 | 48.1 |
| EG | 1.5 | 1.5 | 4 | 6 | 4 | 4 | 4 | 4 | 7 | 2 | 2 | 2 |
| DEOA | 8 | 8 | 6 | 5 | 6 | 4 | 4 | 4 | 3.4 | 6 | 6 | 6 |
| AO/UV | 1.5 | 1.5 | 1.5 | 1.5 | 1.5 | 1.5 | 1.5 | 1.5 | 3.0 | 3.0 | 3.0 | 3.0 |
| ZC | 2 | 2 | 2 | 2 | 2 | 1 | 1 | 1 | -- | -- | -- | -- |
| TX | 1 | 1 | -- | 1.2 | -- | -- | -- | -- | -- | -- | -- | -- |
| CP | 10 | 10 | 10 | 10 | 10 | 5 | 5 | 5 | 5 | 5 | 5 | 5 |
| Cat. | BC1: 0.25 TC1: 0.25 | BC3: 0.25 TC1: 0.25 | BC3: 0.33 TC2: 0.70 | BC3: 0.25 TC3: 0.70 | BC3: 0.33 ZNC: 0.03 TC3: 0.70 | BC1: 0.40 TC1: 0.15 | BC1: 0.40 TC2: 0.90 | BC3: 0.40 TC2: 0.90 | BC2: 1.50 TC1: 0.25 | BC3:1.50 TC2: 0.90 | BC3:1.50 ZNC: 0.25 | BC3:1.50 |
| NCO index | 100 | 100 | 95 | 93 | 95 | 100 | 100 | 100 | 100 | 100 | 100 | 100 |
| Density (kg/m³) | 940 | 970 | 930 | 950 | 930 | 1000 | 1050 | 1050 | 1050 | 1050 | 1050 | 1050 |
| Tack free time (s) | 240 | 240 | 210 | 210 | 180 | 150 | 150 | 150 | 25 | 30 | 30 | 90 |
| VOC (ppm) | 350 | 160 | 40 | 60 | 50 | 350 | 100 | 40 | 350 | 80 | 50 | 90 |

| | | | | | | | | | | | | |
|---|---|---|---|---|---|---|---|---|---|---|---|---|
| * comparative examples | | | | | | | | | | | | |

In the above table, more particularly when comparing S1 and S2, it can first of all be seen that the catalytic effect achieved by bismuth oleate is substantially the same as the catalytic effect of bismuth octoate (for a same amount of the element Bi), notwithstanding the possible steric hindrance of the higher molecular weight carboxyl group. This is possibly due to a reduced susceptibility of bismuth oleate to hydrolysis.

When comparing S1 with S2, it can further be seen that when replacing bismuth octoate by bismuth oleate a substantial reduction of the VOC value can be obtained. A further reduction can be obtained by replacing the tin catalyst dimethyltindineodecanoate (TC1) by the tin catalyst dimethyltindioleate or Cotin 1707 (see S2 - S4), more particularly a reduction of the VOC value well below the limit of 100 ppm.

When comparing S5 with S3, it can be seen that by using a small amount of organozinc catalyst in combination with the organobismuth catalyst (bismuth element/zinc element ratio = 9.6/1) the tack free time can be reduced.

RIM samples R1 and R2 show that a same catalytic effect can be obtained when replacing the tin catalyst dimethyldineodecanoate by dimethyltindioleate, although a catalyst amount which is about 5 times larger is needed. RIM samples R2 and R3 show on the other hand again that replacing bismuth octoate by bismuth oleate does not require an additional amount of catalyst.

From RIM sample R2 it appears that when using a sufficiently large amount of organotin catalyst, the amount of organobismuth catalyst may be reduced to such a value that use can for example be made of the conventional catalyst bismuth octoate without producing too high emission values. A substantial further reduction of the emission values can, however, be obtained by replacing the bismuth octoate by bismuth oleate as illustrated in example R3.

RIM samples R5 and R6 show that, for RIM applications, a short tack free time can be achieved by using the bismuth catalyst either in combination with an organotin or with an organozinc catalyst, the organozinc catalyst being used only in a small amount of 0.25 parts by weight of the element Zn per part by weight of the element Bi (i.e. the bismuth element/zinc element ratio = 4/1). When comparing R6 with R7, it can be seen that, by a relatively small amount of organozinc catalyst, the tack free time can be decreased considerably compared to a formulation wherein only bismuth is used as catalyst. When using a sufficiently high mould temperature, a short tack free time can be obtained in RIM applications by a combination of an organobismuth and an organozinc catalyst, without the use of a tin catalyst.

## Claims

1. A method for producing a micro-cellular or non-cellular light-stable polyurethane material having a density higher than 500 kg/m³, in particular higher than 700 kg/m³, in which method a reactive mixture of polyurethane precursors is allowed to react to produce the polyurethane material, the reactive mixture being composed of components comprising at least:
A) an isocyanate component composed of at least one isocyanate compound having at least two NCO-groups which are not directly attached to an aromatic group;
B) isocyanate-reactive components comprising
b1) an active hydrogen containing component composed of at least one active hydrogen containing compound having:
functional groups comprising primary and/or secondary OH-groups, NH-groups and/or NH₂-groups;
a nominal functionality of from 2 to 8; and
an equivalent weight of between 100 and 4000, preferably of between 800 and 2000;
b2) from 0 to 30 parts, preferably from 2 to 30 parts, per 100 parts of components b1, b2 and b3, of a chain-extender and/or cross-linker component composed of at least one chain-extender and/or of at least one cross-linker having an equivalent weight smaller than 100, the functional groups of which are OH-groups, at least 50% of which are primary OH-groups and the functionality of which is from 2 to 6; and
b3) an amine-initiator component which forms a co-catalytic system with catalyst component C and which is composed of at least one amine-initiator which has a functionality of 2 to 6 and an equivalent weight lower or equal to 200 and which comprises at least one aliphatic or alicyclic NH₂- or NH-group; and
C) a catalyst component which is substantially free of lead and which comprises at least one organobismuth (III) catalyst,
**characterised in that**
said organobismuth catalyst comprises at least one organobismuth (III) catalyst corresponding to the following formula (I): 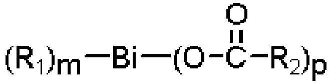
wherein m = 0 - 2
p = 1 - 3
m + p = 3
R₁ is a C₁ - C₈ alkyl group; and
R₂ is either:
a linear or branched C₁₃ - C₁₉ alkyl or alkenyl group, or
a linear or branched C₁ - C₁₉ alkyl or alkenyl group substituted with at least one isocyanate-reactive group, in particular with one or more OH-, NH- and/or NH₂-groups, the substituted alkyl or alkenyl group being preferably a C₇ - C₁₉ alkyl or alkenyl group,
the components of the reactive mixture being further selected in such a manner that the produced polyurethane material has a VOC value, measured in accordance with the Daimler Chrysler PB VWT 709 standard, lower than 250 ppm, preferably lower than 150 ppm and most preferably lower than or equal to 100 ppm.

2. A method according to claim 1, **characterised in that** use is made of an organobismuth catalyst of formula (I) wherein m = 1 or 2 and wherein R₁ is a C₁ - C₄ alkyl group.

3. A method according to claim 1 or 2, **characterised in that** use is made of an organobismuth catalyst of formula (I) wherein m = 0.

4. A method according to any one of the claims 1 to 3, **characterised in that** use is made of an organobismuth catalyst of formula (I) wherein R₂ is a C₁₅ - C₁₉ alkyl or alkenyl group.

5. A method according to any one of the claims 1 to 4, **characterised in that** use is made of an organobismuth catalyst of formula (I) wherein R₂ is a C₁₃ - C₁₉ alkenyl group.

6. A method according to claim 5, **characterised in that** use is made of an organobismuth catalyst of formula (I) wherein the R₂COO-groups are oleyl groups, linoleyl groups and/or linolenyl groups.

7. A method according to any one of the claims 1 to 5, **characterised in that** use is made of an organobismuth catalyst of formula (I) wherein R₂ is a C₁₃ - C₁₉ alkyl or alkenyl group which is not substituted with an isocyanate-reactive group and which is preferably linear.

8. A method according to any one of the claims 1 to 7, **characterised in that** said reactive mixture is either sprayed against a mould surface, in which case the organobismuth catalyst is used in an amount of between 150 and 850 ppm, preferably of between 150 and 600 ppm of the element bismuth in the produced polyurethane material, or the reactive mixture is injected in a closed mould in accordance with the reaction injection moulding (RIM) process, in which case the organobismuth catalyst is used in an amount of between 250 and 2500 ppm, preferably of between 800 and 1650 ppm of the element bismuth in the produced polyurethane material.

9. A method according any one of the claims 1 to 8, **characterised in that** said catalyst component comprises in addition to said organobismuth catalyst at least one organotin (II or IV) catalyst corresponding to the following formula (II): 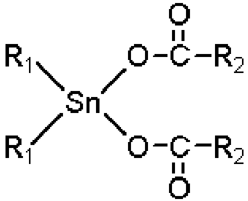 to the following formula (III): 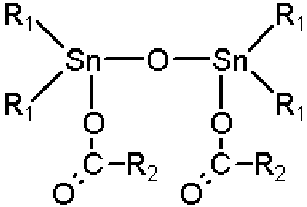 or to the following formula (IV) 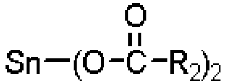 wherein:
R₁ is a C₁ - C₈ alkyl group; and
R₂ is either:
a linear or branched C₁₃ - C₁₉ alkyl or alkenyl group, or
a linear or branched C₁ - C₁₉ alkyl or alkenyl group substituted with at least one isocyanate-reactive group, in particular with one or more OH-, NH- and/or NH₂-groups, the substituted alkyl or alkenyl group being preferably a C₇ - C₁₉ alkyl or alkenyl group.

10. A method according to claim 9, **characterised in that** use is made of an organotin catalyst of formula (II) or (III) wherein R₁ is a C₁ - C₄ alkyl group, preferably a methyl group.

11. A method according to claim 9 or 10, **characterised in that** use is made of an organotin catalyst of formula (II), (III) or (IV) wherein R₂ is a C₁₅ - C₁₉ alkyl or alkenyl group.

12. A method according to any one of the claims 9 to 11, **characterised in that** use is made of an organotin catalyst of formula (II), (III) or (IV) wherein R₂ is a C₁₃ - C₁₉ alkenyl group.

13. A method according to claim 12, **characterised in that** use is made of an organotin catalyst of formula (II), (III) or (IV) wherein the R₂COO-groups are oleyl groups, linoleyl groups and/or linolenyl groups

14. A method according to any one of the claims 9 to 12, **characterised in that** use is made of an organotin catalyst of formula (II), (III) or (IV) wherein R₂ is a C₁₃ - C₁₉ alkyl or alkenyl group which is not substituted with an isocyanate-reactive group and which is preferably linear.

15. A method according to any one of the claims 9 to 14, **characterised in that** said reactive mixture is either sprayed against a mould surface, in which case the organotin catalyst is used in an amount of between 200 and 1600 ppm, preferably of between 200 and 1000 ppm of the element tin in the produced polyurethane material, or the reactive mixture is injected in a closed mould in accordance with the reaction injection moulding (RIM) process, in which case the organotin catalyst is used in an amount of between 200 and 1600 ppm, preferably of between 300 and 1000 ppm of the element tin in the produced polyurethane material.

16. A method according to any one of the claims 1 to 15, **characterised in that** said catalyst component further comprises an organozinc (II) catalyst.

17. A method according to claim 16, **characterised in that** use is made of an organozinc catalyst which corresponds to the following formula (V): 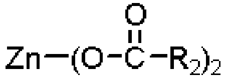 wherein R₂ is a C₁ to C₁₉, preferably a C₁ to C₁₂, alkyl or alkenyl group, which may be linear or branched and which may be substituted or not.

18. A method according to claim 17, **characterised in that** use is made of zinc dioctoate as said organozinc catalyst.

19. A method according to any one of the claims 16 to 18, **characterised in that** the catalyst component comprises the organobismuth and the organozinc catalyst in a bismuth element / zinc element ratio larger than 8/1, preferably larger than 9/1, when applying the reactive mixture by a spray process or larger than 4/1, preferably larger than 5/1, when applying the reactive mixture by a RIM process.

20. A method according to any one of the claims 16 to 19, **characterised in that** the catalyst component further comprises an organotin catalyst as defined in any one of the claims 9 to 15, in particular when the reactive mixture is applied by a spray process.

21. A method according to any one of the claims 1 to 20, **characterised in that** said active hydrogen containing component is substantially free of BHT or comprises at the most 50 ppm BHT.

22. A method according to any one of the claims 1 to 21, **characterised in that** said isocyanate component and said isocyanate-reactive components are allowed to react according to an NCO-index higher than 90, preferably higher than 95 and most preferably higher than or equal to 100, the NCO-index being preferably lower than 120 and most preferably lower than 110.

23. A micro-cellular or non-cellular light-stable polyurethane material having a density higher than 500 kg/m³, in particular higher than 700 kg/m³, which can be obtained by allowing a reactive mixture of polyurethane precursors to react to produce the polyurethane material, which reactive mixture is composed of components comprising at least:
A) an isocyanate component composed of at least one isocyanate compound having at least two NCO-groups which are not directly attached to an aromatic group;
B) isocyanate-reactive components comprising
b1) an active hydrogen containing component composed of at least one active hydrogen containing compound having:
functional groups comprising primary and/or secondary OH-groups, NH-groups and/or NH₂-groups;
a nominal functionality of from 2 to 8; and
an equivalent weight of between 100 and 4000, preferably of between 800 and 2000;
b2) from 0 to 30 parts, preferably from 2 to 30 parts, per 100 parts of components b1, b2 and b3, of a chain-extender and/or cross-linker component composed of at least one chain-extender and/or of at least one cross-linker having an equivalent weight smaller than 100, the functional groups of which are OH-groups, at least 50% of which are primary OH-groups and the functionality of which is from 2 to 6; and
b3) an amine-initiator component which forms a co-catalytic system with catalyst component C and which is composed of at least one amine-initiator which has a functionality of 2 to 6 and an equivalent weight lower or equal to 200 and which comprises at least one aliphatic or alicyclic NH₂- or NH-group; and
C) a catalyst component which is substantially free of lead and which comprises at least one organobismuth (III) catalyst
**characterised in that**
the polyurethane material has a VOC value, measured in accordance with the Daimler Chrysler PB VWT 709 standard, lower than 250 ppm, preferably lower than 150 ppm and most preferably lower than or equal to 100 ppm, and said organobismuth catalyst comprises at least one organobismuth (III) catalyst corresponding to the following formula (I): 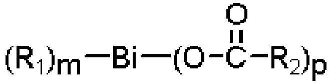
wherein m = 0 - 2
p=1-3
m + p = 3
R₁ is a C₁ - C₈ alkyl group; and
R₂ is either:
a linear or branched C₁₃ - C₁₉ alkyl or alkenyl group, or
a linear or branched C₁ - C₁₉ alkyl or alkenyl group substituted with at least one isocyanate-reactive group, in particular with one or more OH-, NH- and/or NH₂-groups, the substituted alkyl or alkenyl group being preferably a C₇ - C₁₉ alkyl or alkenyl group.

24. A polyurethane material according to claim 23, **characterised in that** said catalyst component comprises in addition to said organobismuth catalyst at least one organotin (II or IV) catalyst corresponding to the following formula (II): 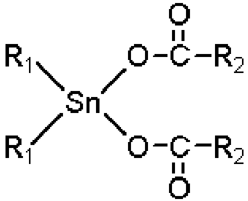 to the following formula (III): 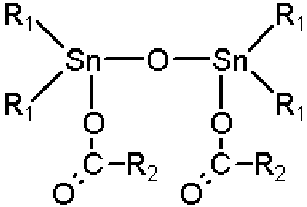 or to the following formula (IV) 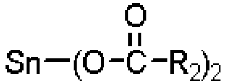 wherein:
R₁ is a C₁ - C₈ alkyl group; and
R₂ is either:
a linear or branched C₁₃ - C₁₉ alkyl or alkenyl group, or
a linear or branched C₁ - C₁₉ alkyl or alkenyl group substituted with at least one isocyanate-reactive group, in particular with one or more OH-, NH- and/or NH₂-groups, the substituted alkyl or alkenyl group being preferably a C₇ - C₁₉ alkyl or alkenyl group.

25. A polyurethane material according to claim 23 or 24, **characterised in that** is produced in accordance with a method as defined in any one of the claims 1 to 22.

26. Use of an organobismuth (III) catalyst corresponding to the following formula (I): 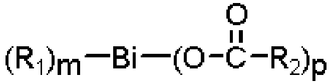
wherein m = 0 - 2
p=1-3
m + p = 3
R₁ is a C₁ - C₈ alkyl group; and
R₂ is either:
a linear or branched C₁₃ - C₁₉ alkyl or alkenyl group, or
a linear or branched C₁ - C₁₉ alkyl or alkenyl group substituted with at least one isocyanate-reactive group, in particular with one or more OH-, NH- and/or NH₂-groups, the substituted alkyl or alkenyl group being preferably a C₇ - C₁₉ alkyl or alkenyl group,
in a method for producing a micro-cellular or non-cellular light-stable polyurethane material having a density higher than 500 kg/m³, in particular higher than 700 kg/m³, to keep the VOC value of the produced polyurethane material, measured in accordance with the Daimler Chrysler PB VWT 709 standard, below 250 ppm, preferably below 150 ppm, and most preferably below or equal to 100 ppm, substantially without the use of an organolead catalyst, in which method a reactive mixture of polyurethane precursors is allowed to react to produce the polyurethane material, the reactive mixture being composed of components comprising at least:
A) an isocyanate component composed of at least one isocyanate compound having at least two NCO-groups which are not directly attached to an aromatic group;
B) isocyanate-reactive components comprising
b1) an active hydrogen containing component composed of at least one active hydrogen containing compound having:
functional groups comprising primary and/or secondary OH-groups, NH-groups and/or NH₂-groups;
a nominal functionality of from 2 to 8; and
an equivalent weight of between 100 and 4000, preferably of between 800 and 2000;
b2) from 0 to 30 parts, preferably from 2 to 30 parts, per 100 parts of components b1, b2 and b3, of a chain-extender and/or cross-linker component composed of at least one chain-extender and/or of at least one cross-linker having an equivalent weight smaller than 100, the functional groups of which are OH-groups, at least 50% of which are primary OH-groups and the functionality of which is from 2 to 6; and
b3) an amine-initiator component which forms a co-catalytic system with catalyst component C and which is composed of at least one amine-initiator which has a functionality of 2 to 6 and an equivalent weight lower or equal to 200 and which comprises at least one aliphatic or alicyclic NH₂- or NH-group; and
C) a catalyst component which is substantially free of lead and which comprises said organobismuth (III) catalyst.

27. Use according to claim 26, **characterised in that** use is made of an organobismuth catalyst showing the characteristics defined in any one of the claims 2 to 8.

28. Use according to claim 26 or 27, **characterised in that** said organobismuth catalyst is used in combination with an organotin (II or IV) catalyst corresponding to the following formula (II): 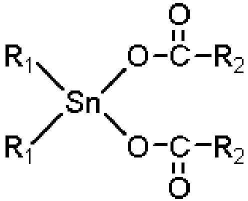 to the following formula (III): 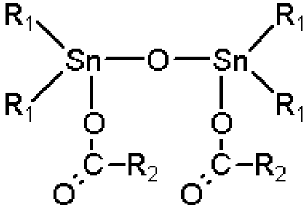 or to the following formula (IV) 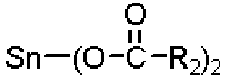 wherein:
R₁ is a C₁ - C₈ alkyl group; and
R₂ is either:
a linear or branched C₁₃ - C₁₉ alkyl or alkenyl group, or
a linear or branched C₁ - C₁₉ alkyl or alkenyl group substituted with at least one isocyanate-reactive group, in particular with one or more OH-, NH- and/or NH₂-groups, the substituted alkyl or alkenyl group being preferably a C₇ - C₁₉ alkyl or alkenyl group.

29. Use according to claim 28, **characterised in that** use is made of an organotin catalyst showing the characteristics defined in any one of the claims 10 to 15.

30. Use according to any one of the claims 26 to 29, **characterised in that** use is further made of an organozinc (II) catalyst showing in particular the characteristics defined in any one of the claims 17 to 19.

## Patentansprüche

1. Ein Verfahren zur Herstellung eines mikrozellulären oder nichtzellulären lichtstabilen Polyurethanmaterials mit einer Dichte von mehr als 500 kg/m³, insbesondere mehr als 700 kg/m³, in welchem Verfahren es einer reaktiven Mischung von Polyurethanvorläufern erlaubt wird, zu reagieren, um das Polyurethanmaterial herzustellen, wobei die reaktive Mischung aus Komponenten besteht, die zumindest Folgendes umfassen:
A) eine Isocyanatkomponente bestehend aus zumindest einer Isocyanatverbindung, welche zumindest zwei NCO-Gruppen hat, die nicht direkt mit einer aromatischen Gruppe verbunden sind;
B) Isocyanat-reaktive Komponenten, welche Folgendes umfassen:
b1) eine aktiven Wasserstoff enthaltende Komponente, die aus zumindest einer aktiven Wasserstoff enthaltenden Verbindung besteht, die Folgendes hat:
funktionelle Gruppen, die primäre und/oder sekundäre OH-Gruppen, NH-Gruppen und/oder NH₂-Gruppen umfassen;
eine nominale Funktionalität von 2 bis 8; und
ein Äquivalentgewicht von zwischen 100 und 4.000, bevorzugt zwischen 800 und 2.000;
b2) von 0 bis 30 Teile, bevorzugt von 2 bis 30 Teile, pro 100 Teile der Komponenten b1, b2 und b3, einer Kettenverlängerer- und/oder Vernetzerkomponente bestehend aus zumindest einem Kettenverlängerer und/oder aus zumindest einem Vernetzer mit einem Äquivalentgewicht kleiner als 100, deren funktionelle Gruppen OH-Gruppen sind, von denen mindestens 50 % primäre OH-Gruppen sind und deren Funktionalität von 2 bis 6 ist; und
b3) eine Amininitiatorkomponente, die ein cokatalytisches System mit Katalysatorkomponente C formt und die aus mindestens einem Amininitiator besteht, der eine Funktionalität von 2 bis 6 hat und ein Äquivalentgewicht von weniger als oder gleich 200 und der zumindest eine aliphatische oder alizyklische NH₂- oder NH-Gruppe umfasst; und
C) eine Katalysatorkomponente, die im Wesentlichen bleifrei ist und die zumindest einen Organobismut-(III)-Katalysator umfasst,
**dadurch gekennzeichnet, dass**
der erwähnte Organobismutkatalysator zumindest einen Organobismut-(III)-Katalysator umfasst, welcher der folgenden Formel (I) entspricht: 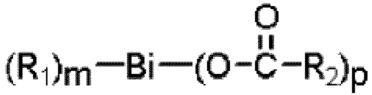
wobei m = 0 - 2
p = 1 - 3
m + p = 3
R₁ eine C₁-C₈-Alkylgruppe ist; und
R₂ entweder Folgendes ist:
eine lineare oder verzweigte C₁₃-C₁₉-Alkyl- oder Alkenylgruppe, oder
eine lineare oder verzweigte C₁-C₁₉-Alkyl- oder Alkenylgruppe substituiert mit zumindest einer Isocyanat-reaktiven Gruppe, insbesondere mit einer oder mehreren OH-, NH- und/oder NH₂-Gruppen, wobei die substituierte Alkyl- oder Alkenylgruppe bevorzugt eine C₇-C₁₉-Alkyl- oder Alkenylgruppe ist,
wobei die Komponenten der reaktiven Mischung ferner so ausgewählt sind, dass das hergestellte Polyurethanmaterial einen VOC-Wert, gemessen nach der Norm Daimler Chrysler PB VWT 709, von weniger als 250 ppm hat, bevorzugt weniger als 150 ppm und am besten weniger als oder gleich 100 ppm.

2. Ein Verfahren nach Anspruch 1, **dadurch gekennzeichnet, dass** ein Organobismutkatalysator der Formel (I) verwendet wird, wobei m = 1 oder 2 und wobei R₁ eine C₁-C₄-Alkylgruppe ist.

3. Ein Verfahren nach Anspruch 1 oder 2, **dadurch gekennzeichnet, dass** ein Organobismutkatalysator der Formel (I) verwendet wird, wobei m = 0.

4. Ein Verfahren nach irgendeinem der Ansprüche 1 bis 3, **dadurch gekennzeichnet, dass** ein Organobismutkatalysator der Formel (I) verwendet wird, wobei R₂ eine C₁₅-C₁₉-Alkyl- oder Alkenylgruppe ist.

5. Ein Verfahren nach irgendeinem der Ansprüche 1 bis 4, **dadurch gekennzeichnet, dass** ein Organobismutkatalysator der Formel (I) verwendet wird, wobei R₂ eine C₁₃-C₁₉-Alkenylgruppe ist.

6. Ein Verfahren nach Anspruch 5, **dadurch gekennzeichnet, dass** ein Organobismutkatalysator der Formel (I) verwendet wird, wobei die R₂COO-Gruppen Oleylgruppen, Linoleylgruppen und/oder Linolenylgruppen sind.

7. Ein Verfahren nach irgendeinem der Ansprüche 1 bis 5, **dadurch gekennzeichnet, dass** ein Organobismutkatalysator der Formel (I) verwendet wird, wobei R₂ eine C₁₃-C₁₉-Alkyl- oder Alkenylgruppe ist, die nicht mit einer Isocyanat-reaktiven Gruppe substituiert ist und die bevorzugt linear ist.

8. Ein Verfahren nach irgendeinem der Ansprüche 1 bis 7, **dadurch gekennzeichnet, dass** die erwähnte reaktive Mischung entweder auf eine Formstückoberfläche gesprüht wird, in welchem Fall der Organobismutkatalysator in einer Menge von zwischen 150 und 850 ppm, bevorzugt von zwischen 150 und 600 ppm des Elements Bismut im hergestellten Polyurethanmaterial verwendet wird, oder dass die reaktive Mischung nach dem Reaction Injection Moulding (RIM) Verfahren in ein geschlossenes Formstück eingespritzt wird, in welchem Fall der Organobismutkatalysator in einer Menge von zwischen 250 und 2.500 ppm, bevorzugt von zwischen 800 und 1.650 ppm des Elements Bismut im hergestellten Polyurethanmaterial verwendet wird.

9. Ein Verfahren nach irgendeinem der Ansprüche 1 bis 8, **dadurch gekennzeichnet, dass** die erwähnte Katalysatorkomponente zusätzlich zum erwähnten Organobismutkatalysator zumindest einen Organozinn-(II oder III)-Katalysator umfasst, welcher der folgenden Formel (II) entspricht: 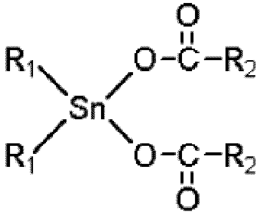 der folgenden Formel (III): 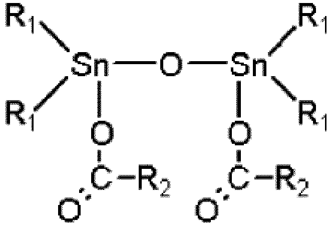 oder der folgenden Formel (IV): 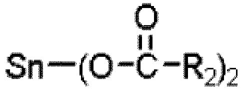 wobei:
R₁ eine C₁-C₈-Alkylgruppe ist; und
R₂ entweder Folgendes ist:
eine lineare oder verzweigte C₁₃-C₁₉-Alkyl- oder Alkenylgruppe, oder
eine lineare oder verzweigte C₁-C₁₉-Alkyl- oder Alkenylgruppe substituiert mit zumindest einer Isocyanat-reaktiven Gruppe, insbesondere mit einer oder mehreren OH-, NH- und/oder NH₂-Gruppen, wobei die substituierte Alkyl- oder Alkenylgruppe bevorzugt eine C₇-C₁₈-Alkyl- oder Alkenylgruppe ist.

10. Ein Verfahren nach Anspruch 9, **dadurch gekennzeichnet, dass** ein Organozinnkatalysator der Formel (II) oder (III) verwendet wird, wobei R₁ eine C₁-C₄-Alkylgruppe, bevorzugt eine Methylgruppe ist.

11. Ein Verfahren nach Anspruch 9 oder 10, **dadurch gekennzeichnet, dass** ein Organozinnkatalysator der Formel (II), (III) oder (IV) verwendet wird, wobei R₂ eine C₁₅-C₁₉-Alkyl- oder Alkenylgruppe ist.

12. Ein Verfahren nach irgendeinem der Ansprüche 9 bis 11, **dadurch gekennzeichnet, dass** ein Organozinnkatalysator der Formel (II), (III) oder (IV) verwendet wird, wobei R₂ eine C₁₃-C₁₉-Alkenylgruppe ist.

13. Ein Verfahren nach Anspruch 12, **dadurch gekennzeichnet, dass** ein Organozinnkatalysator der Formel (II), (III) oder (IV) verwendet wird, wobei die R₂COO-Gruppen Oleylgruppen, Linoleylgruppen und/oder Linolenylgruppen sind.

14. Ein Verfahren nach irgendeinem der Ansprüche 9 bis 12, **dadurch gekennzeichnet, dass** ein Organozinnkatalysator der Formel (II), (III) oder (IV) verwendet wird, wobei R₂ eine C₁₃-C₁₉-Alkyl- oder Alkenylgruppe ist, die nicht mit einer Isocyanat-reaktiven Gruppe substituiert ist und die bevorzugt linear ist.

15. Ein Verfahren nach irgendeinem der Ansprüche 9 bis 14, **dadurch gekennzeichnet, dass** die erwähnte reaktive Mischung entweder auf eine Formstückoberfläche gesprüht wird, in welchem Fall der Organozinnkatalysator in einer Menge von zwischen 200 und 1.600 ppm, bevorzugt von zwischen 200 und 1.000 ppm des Elements Zinn im hergestellten Polyurethanmaterial verwendet wird, oder dass die reaktive Mischung nach dem Reaction Injection Moulding (RIM) Verfahren in ein geschlossenes Formstück eingespritzt wird, in welchem Fall der Organozinnkatalysator in einer Menge von zwischen 200 und 1.600 ppm, bevorzugt von zwischen 300 und 1.000 ppm des Elements Zinn im hergestellten Polyurethanmaterial verwendet wird.

16. Ein Verfahren nach irgendeinem der Ansprüche 1 bis 15, **dadurch gekennzeichnet, dass** die erwähnte Katalysatorkomponente ferner einen Organozink-(II)-Katalysator umfasst.

17. Ein Verfahren nach Anspruch 16, **dadurch gekennzeichnet, dass** ein Organozinkkatalysator verwendet wird, welcher der folgenden Formel (V) entspricht: 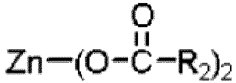 wobei R₂ eine C₁-C₁₉-, bevorzugt eine C₁-C₁₂-, Alkyl- oder Alkenylgruppe ist, die linear oder verzweigt sein kann und die substituiert sein kann oder nicht.

18. Ein Verfahren nach Anspruch 17, **dadurch gekennzeichnet, dass** Zinkdioktoat als der erwähnte Organozinkkatalysator verwendet wird.

19. Ein Verfahren nach irgendeinem der Ansprüche 16 bis 18, **dadurch gekennzeichnet, dass** die Katalysatorkomponente den Organobismut- und den Organozinkkatalysator in einem Verhältnis Element Bismut / Element Zink von mehr als 8/1 umfasst, bevorzugt mehr als 9/1, wenn die reaktive Mischung durch ein Sprühverfahren aufgetragen wird, oder mehr als 4/1, bevorzugt mehr als 5/1, wenn die reaktive Mischung durch ein RIM-Verfahren aufgetragen wird.

20. Ein Verfahren nach irgendeinem der Ansprüche 16 bis 19, **dadurch gekennzeichnet, dass** die Katalysatorkomponente ferner einen Organozinnkatalysator wie definiert in irgendeinem der Ansprüche 9 bis 15 umfasst, insbesondere wenn die reaktive Mischung durch ein Sprühverfahren aufgetragen wird.

21. Ein Verfahren nach irgendeinem der Ansprüche 1 bis 20, **dadurch gekennzeichnet, dass** die erwähnte, aktiven Wasserstoff enthaltende Komponente im Wesentlichen frei von BHT ist oder höchstens 50 ppm BHT umfasst.

22. Ein Verfahren nach irgendeinem der Ansprüche 1 bis 21, **dadurch gekennzeichnet, dass** der erwähnten Isocyanatkomponente und den erwähnten Isocyanat-reaktiven Komponenten erlaubt wird, nach einem NCO-Index von höher als 90 zu reagieren, bevorzugt höher als 95 und am besten höher als oder gleich 100, wobei der NCO-Index bevorzugt niedriger als 120 und am besten niedriger als 110 ist.

23. Ein mikrozelluläres oder nichtzelluläres lichtstabiles Polyurethanmaterial mit einer Dichte von mehr als 500 kg/m³, insbesondere mehr als 700 kg/m³, das erhalten werden kann, indem es einer reaktiven Mischung von Polyurethanvorläufern erlaubt wird, zu reagieren, um das Polyurethanmaterial herzustellen, wobei die reaktive Mischung aus Komponenten besteht, die zumindest Folgendes umfassen:
A) eine Isocyanatkomponente bestehend aus zumindest einer Isocyanatverbindung, welche zumindest zwei NCO-Gruppen hat, die nicht direkt mit einer aromatischen Gruppe verbunden sind;
B) Isocyanat-reaktive Komponenten, welche Folgendes umfassen:
b1) eine aktiven Wasserstoff enthaltende Komponente, die aus zumindest einer aktiven Wasserstoff enthaltenden Verbindung besteht, die Folgendes hat:
funktionelle Gruppen, die primäre und/oder sekundäre OH-Gruppen, NH-Gruppen und/oder NH₂-Gruppen umfassen;
eine nominale Funktionalität von 2 bis 8; und
ein Äquivalentgewicht von zwischen 100 und 4.000, bevorzugt zwischen 800 und 2.000;
b2) von 0 bis 30 Teile, bevorzugt von 2 bis 30 Teile, pro 100 Teile der Komponenten b1, b2 und b3, einer Kettenverlängerer- und/oder Vernetzerkomponente bestehend aus zumindest einem Kettenverlängerer und/oder aus zumindest einem Vernetzer mit einem Äquivalentgewicht kleiner als 100, deren funktionelle Gruppen OH-Gruppen sind, von denen mindestens 50 % primäre OH-Gruppen sind und deren Funktionalität von 2 bis 6 ist; und
b3) eine Amininitiatorkomponente, die ein cokatalytisches System mit Katalysatorkomponente C formt und die aus mindestens einem Amininitiator besteht, der eine Funktionalität von 2 bis 6 hat und ein Äquivalentgewicht von weniger als oder gleich 200 und der zumindest eine aliphatische oder alizyklische NH₂- oder NH-Gruppe umfasst; und
C) eine Katalysatorkomponente, die im Wesentlichen bleifrei ist und die zumindest einen Organobismut-(III)-Katalysator umfasst
**dadurch gekennzeichnet, dass**
das Polyurethanmaterial einen VOC-Wert, gemessen nach der Norm Daimler Chrysler PB VWT 709, von weniger als 250 ppm hat, bevorzugt weniger als 150 ppm und am besten weniger als oder gleich 100 ppm, und der erwähnte Organobismutkatalysator zumindest einen Organobismut-(III)-Katalysator umfasst, welcher der folgenden Formel (I) entspricht: 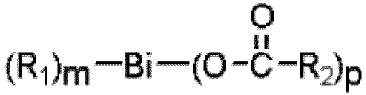
wobei m = 0 - 2
p = 1 - 3
m + p = 3
R₁ eine C₁- C₈-Alkylgruppe ist; und R₂ entweder Folgendes ist:
eine lineare oder verzweigte C₁₃-C₁₉-Alkyl- oder Alkenylgruppe, oder
eine lineare oder verzweigte C₁-C₁₉-Alkyl- oder Alkenylgruppe substituiert mit zumindest einer Isocyanat-reaktiven Gruppe, insbesondere mit einer oder mehreren OH-, NH- und/oder NH₂-Gruppen, wobei die substituierte Alkyl- oder Alkenylgruppe bevorzugt eine C₇-C₁₉-Alkyl- oder Alkenylgruppe ist.

24. Ein Polyurethanmaterial nach Anspruch 23, **dadurch gekennzeichnet, dass** die erwähnte Katalysatorkomponente zusätzlich zum erwähnten Organobismutkatalysator zumindest einen Organozinn-(II oder III)-Katalysator umfasst, welcher der folgenden Formel (II) entspricht: 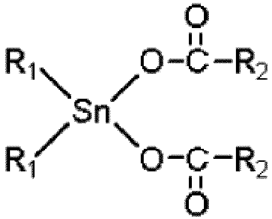 der folgenden Formel (III): 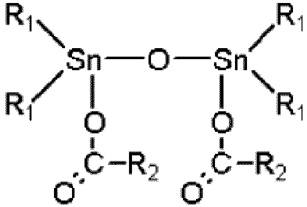 oder der folgenden Formel (IV): 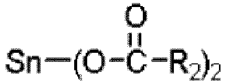 wobei:
R₁ eine C₁-C₈-Alkylgruppe ist; und
R₂ entweder Folgendes ist:
eine lineare oder verzweigte C₁₃-C₁₉-Alkyl- oder Alkenylgruppe, oder
eine lineare oder verzweigte C₁-C₁₉-Alkyl- oder Alkenylgruppe substituiert mit zumindest einer Isocyanat-reaktiven Gruppe, insbesondere mit einer oder mehreren OH-, NH- und/oder NH₂-Gruppen, wobei die substituierte Alkyl- oder Alkenylgruppe bevorzugt eine C₇-C₁₉-Alkyl- oder Alkenylgruppe ist.

25. Ein Polyurethanmaterial nach Anspruch 23 oder 24, **dadurch gekennzeichnet, dass** es nach einem Verfahren hergestellt wird, wie es in irgendeinem der Ansprüche 1 bis 22 definiert ist.

26. Verwendung eines Organobismut-(III)-Katalysators, welcher der folgenden Formel (I) entspricht: 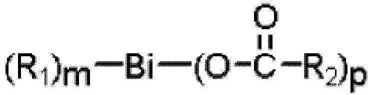
wobei m = 0 - 2
p = 1 - 3
m + p = 3
R₁ eine C₁-C₈-Alkylgruppe ist; und
R₂ entweder Folgendes ist:
eine lineare oder verzweigte C₁₃-C₁₉-Alkyl- oder Alkenylgruppe, oder
eine lineare oder verzweigte C₁-C₁₉-Alkyl- oder Alkenylgruppe substituiert mit zumindest einer Isocyanat-reaktiven Gruppe, insbesondere mit einer oder mehreren OH-, NH- und/oder NH₂-Gruppen, wobei die substituierte Alkyl- oder Alkenylgruppe bevorzugt eine C₇-C₁₉-Alkyl- oder Alkenylgruppe ist,
in einem Verfahren zur Herstellung eines mikrozellulären oder nichtzellulären lichtstabilen Polyurethanmaterials mit einer Dichte höher als 500 kg/m3, insbesondere höher als 700 kg/m3, um den VOC-Wert des hergestellten Polyurethanmaterials, gemessen nach der Norm Daimler Chrysler PB VWT 709, niedriger als 250 ppm zu halten, bevorzugt niedriger als 150 ppm und am besten niedriger als oder gleich 100 ppm, im Wesentlichen ohne Einsatz eines Organobleikatalysators, in welchem Verfahren es einer reaktiven Mischung von Polyurethanvorläufern erlaubt wird, zu reagieren, um das Polyurethanmaterial herzustellen, wobei die reaktive Mischung aus Komponenten besteht, die zumindest Folgendes umfassen:
A) eine Isocyanatkomponente bestehend aus zumindest einer Isocyanatverbindung, welche zumindest zwei NCO-Gruppen hat, die nicht direkt mit einer aromatischen Gruppe verbunden sind;
B) Isocyanat-reaktive Komponenten, welche Folgendes umfassen:
b1) eine aktiven Wasserstoff enthaltende Komponente, die aus zumindest einer aktiven Wasserstoff enthaltenden Verbindung besteht, die Folgendes hat:
funktionelle Gruppen, die primäre und/oder sekundäre OH-Gruppen, NH-Gruppen und/oder NH₂-Gruppen umfassen;
eine nominale Funktionalität von 2 bis 8; und
ein Äquivalentgewicht von zwischen 100 und 4.000, bevorzugt zwischen 800 und 2.000;
b2) von 0 bis 30 Teile, bevorzugt von 2 bis 30 Teile, pro 100 Teile der Komponenten b1, b2 und b3, einer Kettenverlängerer- und/oder Vernetzerkomponente bestehend aus zumindest einem Kettenverlängerer und/oder aus zumindest einem Vernetzer mit einem Äquivalentgewicht kleiner als 100, deren funktionelle Gruppen OH-Gruppen sind, von denen mindestens 50 % primäre OH-Gruppen sind und deren Funktionalität von 2 bis 6 ist; und
b3) eine Amininitiatorkomponente, die ein cokatalytisches System mit Katalysatorkomponente C formt und die aus mindestens einem Amininitiator besteht, der eine Funktionalität von 2 bis 6 hat und ein Äquivalentgewicht von weniger als oder gleich 200 und der zumindest eine aliphatische oder alizyklische NH₂- oder NH-Gruppe umfasst; und
C) eine Katalysatorkomponente, die im Wesentlichen bleifrei ist und die den erwähnten Organobismut-(III)-Katalysator umfasst.

27. Verwendung nach Anspruch 26, **dadurch gekennzeichnet, dass** ein Organobismutkatalysator verwendet wird, der die in irgendeinem der Ansprüche 2 bis 8 definierten Merkmale aufweist.

28. Verwendung nach Anspruch 26 oder 27, **dadurch gekennzeichnet, dass** der erwähnte Organobismutkatalysator in Kombination mit einem Organozinn-(II oder III)-Katalysator verwendet wird, welcher der folgenden Formel (II) entspricht: 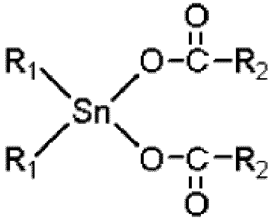 der folgenden Formel (III): 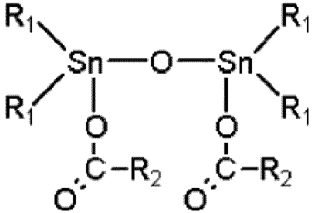 oder der folgenden Formel (IV): 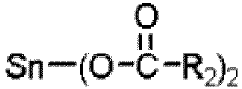 wobei:
R₁ eine C₁-C₈-Alkylgruppe ist; und
R₂ entweder Folgendes ist:
eine lineare oder verzweigte C₁₃-C₁₉-Alkyl- oder Alkenylgruppe, oder
eine lineare oder verzweigte C₁-C₁₉-Alkyl- oder Alkenylgruppe substituiert mit zumindest einer Isocyanat-reaktiven Gruppe, insbesondere mit einer oder mehreren OH-, NH- und/oder NH₂-Gruppen, wobei die substituierte Alkyl- oder Alkenylgruppe bevorzugt eine C₇-C₁₉-Alkyl- oder Alkenylgruppe ist.

29. Verwendung nach Anspruch 28, **dadurch gekennzeichnet, dass** ein Organozinnkatalysator verwendet wird, der die in irgendeinem der Ansprüche 10 bis 15 definierten Merkmale aufweist.

30. Verwendung nach irgendeinem der Ansprüche 26 bis 29, **dadurch gekennzeichnet, dass** ferner ein Organozink-(II)-Katalysator verwendet wird, der insbesondere die in irgendeinem der Ansprüche 17 bis 19 definierten Merkmale aufweist.

## Revendications

1. Procédé de production d'un matériau de polyuréthane photostable microcellulaire ou non cellulaire possédant une masse volumique supérieure à 500 kg/m³, en particulier, supérieure à 700 kg/m³, procédé dans lequel on laisse réagir un mélange réactif de précurseurs de polyuréthane pour produire le matériau de polyuréthane, le mélange réactif étant composé de composants comprenant au moins :
A) un composant isocyanate composé d'au moins un composé isocyanate possédant au moins deux groupes NCO qui ne sont pas directement fixés à un groupe aromatique ;
B) des composants réactifs avec un isocyanate comprenant
b1) un composant contenant de l'hydrogène actif composé d'au moins un composé contenant de l'hydrogène actif possédant :
des groupes fonctionnels comprenant des groupes OH primaires et/ou secondaires , des groupes NH et/ou des groupes NH₂ ;
une fonctionnalité nominale allant de 2 à 8 ; et
un poids équivalent compris entre 100 et 4000, de préférence compris entre 800 et 2000 ;
b2) de 0 à 30 parties, de préférence de 2 à 30 parties, pour 100 parties de composants b1, b2 et b3, d'un composant d'allongement de chaîne et/ou de réticulation, composé d'au moins un agent d'allongement de chaîne et/ou d'au moins un agent réticulant possédant un poids équivalent inférieur à 100, dont les groupes fonctionnels sont des groupes OH, dont au moins 50 % sont des groupes OH primaires et dont la fonctionnalité va de 2 à 6 ; et
b3) un composant initiateur aminé qui forme un système co-catalytique avec le composant catalyseur C et qui est composé d'au moins un initiateur aminé qui a une fonctionnalité de 2 à 6 et un poids équivalent inférieur ou égal à 200 et qui comprend au moins un groupe NH₂ ou NH aliphatique ou alicyclique ; et
C) un composant catalyseur qui est essentiellement dépourvu de plomb et qui comprend au moins un catalyseur de type organo-bismuth (III),
**caractérisé en ce que**
ledit catalyseur de type organo-bismuth comprend au moins un catalyseur de type organo-bismuth (III) correspondant à la formule (I) suivante : 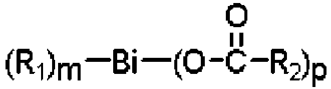 où
m = 0 à 2
p = 1 à 3
m + p = 3
R₁ est un groupe alkyle en C₁ à C₈ ; et
R₂ est soit :
un groupe alkyle ou alcényle en C₁₃ à C₁₉ linéaire ou ramifié, soit
un groupe alkyle ou alcényle en C₁ à C₁₉ linéaire ou ramifié substitué par au moins un groupe réactif avec un isocyanate, en particulier par un ou plusieurs groupes OH, NH et/ou NH₂, le groupe alkyle ou alcényle substitué étant de préférence un groupe alkyle ou alcényle en C₇ à C₁₉,
les composants du mélange réactif étant en outre choisis d'une manière telle que le matériau de polyuréthane produit possède une teneur en composés organiques volatils, mesurée conformément à la norme Daimler Chrysler PB VWT 709, inférieure à 250 ppm, de préférence, inférieure à 150 ppm et idéalement, inférieure ou égale à 100 ppm.

2. Procédé selon la revendication 1, **caractérisé en ce que** l'on a recours à un catalyseur de type organo-bismuth de formule (I) où m = 1 ou 2 et où R₁ est un groupe alkyle en C₁ à C₄.

3. Procédé selon la revendication 1 ou 2, **caractérisé en ce que** l'on a recours à un catalyseur de type organo-bismuth de formule (I) où m = 0.

4. Procédé selon l'une quelconque des revendications 1 à 3, **caractérisé en ce que** l'on a recours à un catalyseur de type organo-bismuth de formule (I) où R₂ est un groupe alkyle ou alcényle en C₁₅ à C₁₉.

5. Procédé selon l'une quelconque des revendications 1 à 4, **caractérisé en ce que** l'on a recours à un catalyseur de type organo-bismuth de formule (I) où R₂ est un groupe alcényle en C₁₃ à C₁₉.

6. Procédé selon la revendication 5, **caractérisé en ce que** l'on a recours à un catalyseur de type organo-bismuth de formule (I) où les groupes R₂COO sont des groupes oléyle, des groupes linoléyle et/ou des groupes linolényle.

7. Procédé selon l'une quelconque des revendications 1 à 5, **caractérisé en ce que** l'on a recours à un catalyseur de type organo-bismuth de formule (I) où R₂ est un groupe alkyle ou alcényle en C₁₃ à C₁₉ qui n'est pas substitué par un groupe réactif avec un isocyanate et qui est de préférence linéaire.

8. Procédé selon l'une quelconque des revendications 1 à 7, **caractérisé en ce que** ledit mélange réactif est soit pulvérisé contre une surface de moule, auquel cas le catalyseur de type organo-bismuth est utilisé en une quantité comprise entre 150 et 850 ppm, de préférence comprise entre 150 et 600 ppm du bismuth élémentaire dans le matériau de polyuréthane produit, soit le mélange réactif est injecté dans un moule fermé conformément au processus de moulage par injection et réaction (RIM), auquel cas le catalyseur de type organo-bismuth est utilisé en une quantité comprise entre 250 et 2500 ppm, de préférence comprise entre 800 et 1650 ppm du bismuth élémentaire dans le matériau de polyuréthane produit.

9. Procédé selon l'une quelconque des revendications 1 à 8, **caractérisé en ce que** ledit composant catalyseur comprend, en plus dudit catalyseur de type organo-bismuth, au moins un catalyseur de type organo-étain (II ou IV) correspondant à la formule (II) suivante : 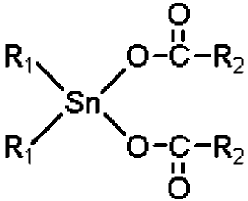 à la formule (III) suivante : 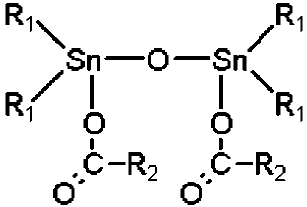 ou à la formule (IV) suivante : 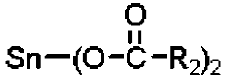 où :
R₁ est un groupe alkyle en C₁ à C₈ ; et
R₂ est soit :
un groupe alkyle ou alcényle en C₁₃ à C₁₉ linéaire ou ramifié, soit
un groupe alkyle ou alcényle en C₁ à C₁₉ linéaire ou ramifié substitué par au moins un groupe réactif avec un isocyanate, en particulier par un ou plusieurs groupes OH, NH et/ou NH₂, le groupe alkyle ou alcényle substitué étant de préférence un groupe alkyle ou alcényle en C₇ à C₁₉.

10. Procédé selon la revendication 9, **caractérisé en ce que** l'on a recours à un catalyseur de type organo-étain de formule (II) ou (III) où R₂ est un groupe alkyle en C₁ à C₄, de préférence un groupe méthyle.

11. Procédé selon la revendication 9 ou 10, **caractérisé en ce que** l'on a recours à un catalyseur de type organo-étain de formule (II), (III) ou (IV) où R₂ est un groupe alkyle ou alcényle en C₁₅ à C₁₉.

12. Procédé selon l'une quelconque des revendications 9 à 11, **caractérisé en ce que** l'on a recours à un catalyseur de type organo-étain de formule (II), (III) ou (IV) où R₂ est un groupe alcényle en C₁₃ à C₁₉.

13. Procédé selon la revendication 12, **caractérisé en ce que** l'on a recours à un catalyseur de type organo-étain de formule (II), (III) ou (IV) où les groupes R₂COO sont des groupes oléyle, des groupes linoléyle et/ou des groupes linolényle.

14. Procédé selon l'une quelconque des revendications 9 à 12, **caractérisé en ce que** l'on a recours à un catalyseur de type organo-étain de formule (II), (III) ou (IV) où R₂ est un groupe alkyle ou alcényle en C₁₃ à C₁₉ qui n'est pas substitué par un groupe réactif avec un isocyanate et qui est de préférence linéaire.

15. Procédé selon l'une quelconque des revendications 9 à 14, **caractérisé en ce que** ledit mélange réactif est soit pulvérisé contre une surface de moule, auquel cas le catalyseur de type organo-étain est utilisé en une quantité comprise entre 200 et 1600 ppm, de préférence comprise entre 200 et 1000 ppm de l'étain élémentaire dans le matériau de polyuréthane produit, soit le mélange réactif est injecté dans un moule fermé conformément au processus de moulage par injection et réaction (RIM), auquel cas le catalyseur de type organo-étain est utilisé en une quantité comprise entre 200 et 1600 ppm, de préférence comprise entre 300 et 1000 ppm de l'étain élémentaire dans le matériau de polyuréthane produit.

16. Procédé selon l'une quelconque des revendications 1 à 15, **caractérisé en ce que** ledit composant catalyseur comprend en outre un catalyseur de type organo-zinc (II).

17. Procédé selon la revendication 16, **caractérisé en ce que** l'on a recours à un catalyseur de type organo-zinc qui correspond à la formule (V) suivante : 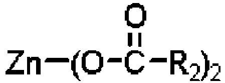 où R₂ est un groupe alkyle ou alcényle en C₁ à C₁₉, de préférence en C₁ à C₁₂, qui peut être linéaire ou ramifié et qui peut être substitué ou non.

18. Procédé selon la revendication 17, **caractérisé en ce que** l'on a recours à du di-octoate de zinc en tant que catalyseur de type organo-zinc précité.

19. Procédé selon l'une quelconque des revendications 16 à 18, **caractérisé en ce que** le composant catalyseur comprend le catalyseur de type organo-bismuth et le catalyseur de type organo-zinc dans un rapport de bismuth élémentaire / zinc élémentaire supérieur à 8/1, de préférence, supérieur à 9/1, lors de l'application du mélange réactif par un processus de pulvérisation ou supérieur à 4/1, de préférence, supérieur à 5/1, lors de l'application du mélange réactif par un processus RIM.

20. Procédé selon l'une quelconque des revendications 16 à 19, **caractérisé en ce que** le composant catalyseur comprend en outre un catalyseur de type organo-étain tel que défini dans l'une quelconque des revendications 9 à 15, en particulier lorsque le mélange réactif est appliqué par un processus de pulvérisation.

21. Procédé selon l'une quelconque des revendications 1 à 20, **caractérisé en ce que** ledit composant contenant de l'hydrogène actif est essentiellement dépourvu de BHT ou comprend au plus 50 ppm de BHT.

22. Procédé selon l'une quelconque des revendications 1 à 21, **caractérisé en ce qu'**on laisse réagir ledit composant isocyanate et lesdits composants réactifs avec un isocyanate selon un indice de NCO supérieur à 90, de préférence, supérieur à 95 et idéalement, supérieur ou égal à 100, l'indice de NCO étant de préférence, inférieur à 120 et idéalement inférieur à 110.

23. Matériau de polyuréthane photostable microcellulaire ou non cellulaire possédant une masse volumique supérieure à 500 kg/m³, en particulier, supérieure à 700 kg/m³, qui peut être obtenu en laissant réagir un mélange réactif de précurseurs de polyuréthane pour produire le matériau de polyuréthane, lequel mélange réactif est composé de composants comprenant au moins :
A) un composant isocyanate composé d'au moins un composé isocyanate possédant au moins deux groupes NCO qui ne sont pas directement fixés à un groupe aromatique ;
B) des composants réactifs avec un isocyanate comprenant
b1) un composant contenant de l'hydrogène actif composé d'au moins un composé contenant de l'hydrogène actif possédant :
des groupes fonctionnels comprenant des groupes OH, des groupes NH et/ou des groupes NH₂, primaires et/ou secondaires ;
une fonctionnalité nominale allant de 2 à 8 ; et
un poids équivalent compris entre 100 et 4000, de préférence compris entre 800 et 2000 ;
b2) de 0 à 30 parties, de préférence de 2 à 30 parties, pour 100 parties de composants b1, b2 et b3, d'un composant d'allongement de chaîne et/ou de réticulation, composé d'au moins un agent d'allongement de chaîne et/ou d'au moins un agent réticulant possédant un poids équivalent inférieur à 100, dont les groupes fonctionnels sont des groupes OH, dont au moins 50 % sont des groupes OH primaires et dont la fonctionnalité va de 2 à 6 ; et
b3) un composant initiateur aminé qui forme un système co-catalytique avec le composant catalyseur C et qui est composé d'au moins un initiateur aminé qui a une fonctionnalité de 2 à 6 et un poids équivalent inférieur ou égal à 200 et qui comprend au moins un groupe NH₂ ou NH aliphatique ou alicyclique ; et
C) un composant catalyseur qui est essentiellement dépourvu de plomb et qui comprend au moins un catalyseur de type organo-bismuth (III),
**caractérisé en ce que**
le matériau de polyuréthane possède une teneur en composés organiques volatils, mesurée conformément à la norme Daimler Chrysler PB VWT 709, inférieure à 250 ppm, de préférence, inférieure à 150 ppm et idéalement, inférieure ou égale à 100 ppm, et ledit catalyseur de type organo-bismuth comprend au moins un catalyseur de type organo-bismuth (III) correspondant à la formule (I) suivante : 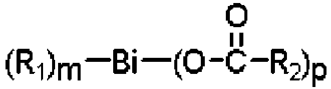 où
m = 0 à 2
p = 1 à 3
m + p = 3
R₁ est un groupe alkyle en C₁ à C₈ ; et
R₂ est soit :
un groupe alkyle ou alcényle en C₁₃ à C₁₉ linéaire ou ramifié, soit
un groupe alkyle ou alcényle en C₁ à C₁₉ linéaire ou ramifié substitué par au moins un groupe réactif avec un isocyanate, en particulier par un ou plusieurs groupes OH, NH et/ou NH₂, le groupe alkyle ou alcényle substitué étant de préférence un groupe alkyle ou alcényle en C₇ à C_{19.}

24. Matériau de polyuréthane selon la revendication 23, **caractérisé en ce que** ledit composant catalyseur comprend, en plus dudit catalyseur de type organo-bismuth, au moins un catalyseur de type organo-étain (II ou IV) correspondant à la formule (II) suivante : 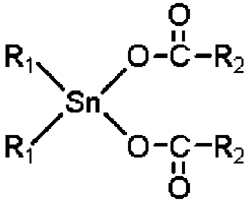 à la formule (III) suivante : 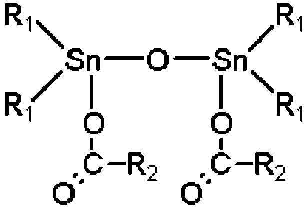 ou à la formule (IV) suivante : 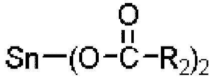 où :
R₁ est un groupe alkyle en C₁ à C₈ ; et
R₂ est soit :
un groupe alkyle ou alcényle en C₁₃ à C₁₉ linéaire ou ramifié, soit
un groupe alkyle ou alcényle en C₁ à C₁₉ linéaire ou ramifié substitué par au moins un groupe réactif avec un isocyanate, en particulier par un ou plusieurs groupes OH, NH et/ou NH₂, le groupe alkyle ou alcényle substitué étant de préférence un groupe alkyle ou alcényle en C₇ à C_{19.}

25. Matériau de polyuréthane selon la revendication 23 ou 24, **caractérisé en ce qu'**il est produit conformément à un procédé tel que défini dans l'une quelconque des revendications 1 à 22.

26. Utilisation d'un catalyseur de type organo-bismuth (III) correspondant à la formule (I) suivante : 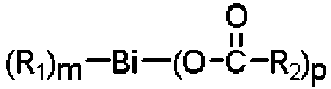 où
m = 0 à 2
p = 1 à 3
m + p = 3
R₁ est un groupe alkyle en C₁ à C₈ ; et
R₂ est soit :
un groupe alkyle ou alcényle en C₁₃ à C₁₉ linéaire ou ramifié, soit
un groupe alkyle ou alcényle en C₁ à C₁₉ linéaire ou ramifié substitué par au moins un groupe réactif avec un isocyanate, en particulier par un ou plusieurs groupes OH, NH et/ou NH₂, le groupe alkyle ou alcényle substitué étant de préférence un groupe alkyle ou alcényle en C₇ à C₁₉,
dans un procédé de production d'un matériau de polyuréthane photostable microcellulaire ou non cellulaire possédant une masse volumique supérieure à 500 kg/m³, en particulier, supérieure à 700 kg/m³, pour maintenir la teneur en composés organiques volatils du matériau de polyuréthane produit, mesurée conformément à la norme Daimler Chrysler PB VWT 709, inférieure à 250 ppm, de préférence, inférieure à 150 ppm et idéalement, inférieure ou égale à 100 ppm, sensiblement sans le recours à un catalyseur de type organo-plomb, procédé dans lequel on laisse réagir un mélange réactif de précurseurs de polyuréthane pour produire le matériau de polyuréthane, le mélange réactif étant composé de composants comprenant au moins :
A) un composant isocyanate composé d'au moins un composé isocyanate possédant au moins deux groupes NCO qui ne sont pas directement fixés à un groupe aromatique ;
B) des composants réactifs avec un isocyanate comprenant
b1) un composant contenant de l'hydrogène actif composé d'au moins un composé contenant de l'hydrogène actif possédant :
des groupes fonctionnels comprenant des groupes OH, des groupes NH et/ou des groupes NH₂, primaires et/ou secondaires ;
une fonctionnalité nominale allant de 2 à 8 ; et
un poids équivalent compris entre 100 et 4000, de préférence, compris entre 800 et 2000 ;
b2) de 0 à 30 parties, de préférence de 2 à 30 parties, pour 100 parties de composants b1, b2 et b3, d'un composant d'allongement de chaîne et/ou de réticulation composé d'au moins un agent d'allongement de chaîne et/ou d'au moins un agent réticulant possédant un poids équivalent inférieur à 100, dont les groupes fonctionnels sont des groupes OH, dont au moins 50 % sont des groupes OH primaires et dont la fonctionnalité va de 2 à 6 ; et
b3) un composant initiateur aminé qui forme un système co-catalytique avec le composant catalyseur C et qui est composé d'au moins un initiateur aminé qui a une fonctionnalité de 2 à 6 et un poids équivalent inférieur ou égal à 200 et qui comprend au moins un groupe NH₂ ou NH aliphatique ou alicyclique ; et
C) un composant catalyseur qui est essentiellement dépourvu de plomb et qui comprend ledit catalyseur de type organo-bismuth (III).

27. Utilisation selon la revendication 26, **caractérisée en ce que** l'on a recours à un catalyseur de type organo-bismuth présentant les caractéristiques définies dans l'une quelconque des revendications 2 à 8.

28. Utilisation selon la revendication 26 ou 27, **caractérisée en ce que** ledit catalyseur de type organo-bismuth est utilisé en combinaison avec un catalyseur de type organo-étain (II ou IV) correspondant à la formule (II) suivante : 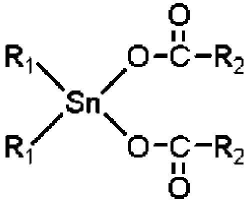 à la formule (III) suivante : 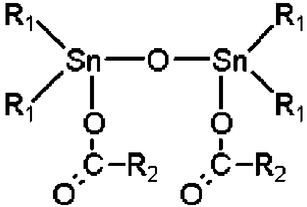 ou à la formule (IV) suivante : 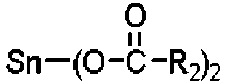 où :
R₁ est un groupe alkyle en C₁ à C₈ ; et
R₂ est soit :
un groupe alkyle ou alcényle en C₁₃ à C₁₉ linéaire ou ramifié, soit
un groupe alkyle ou alcényle en C₁ à C₁₉ linéaire ou ramifié substitué par au moins un groupe réactif avec un isocyanate, en particulier par un ou plusieurs groupes OH, NH et/ou NH₂, le groupe alkyle ou alcényle substitué étant de préférence un groupe alkyle ou alcényle en C₇ à C_{19.}

29. Utilisation selon la revendication 28, **caractérisée en ce que** l'on a recours à un catalyseur de type organo-étain présentant les caractéristiques définies dans l'une quelconque des revendications 10 à 15.

30. Utilisation selon l'une quelconque des revendications 26 à 29, **caractérisée en ce que** l'on a en outre recours à un catalyseur de type organo-zinc (II) présentant en particulier les caractéristiques définies dans l'une quelconque des revendications 17 à 19.
